# FASCICULE DE BREVET EUROPEEN

(11) **EP 3 365 826 B1**
(45) Date de publication et mention de la délivrance du brevet: **04.08.2021**
(21) Numéro de dépôt: 16787386.8
(22) Date de dépôt: 20.10.2016
(51) Int. Cl.: G06F 21/35, G06F 3/044

(54) **DISPOSITIF D'AUTHENTIFICATION TACTILE ET SONORE**
BERÜHRUNG- UND TONAUTHENTIFIZIERUNGSVORRICHTUNG
TOUCH AND SOUND AUTHENTICATION DEVICE

(30) Priorité: 20.10.2015 FR 1559966
(43) Date de publication de la demande: 29.08.2018
(73) Titulaire: Bystamp, 56000 Vannes (FR)
(72) Inventeur: MAISON, Thierry, 56000 Vannes (FR); LE BAIL, Yann, 56000 Vannes (FR)
(74) Mandataire: Cabinet Le Guen Maillet
(86) Numéro de dépôt international: PCT/EP2016/075235
(87) Numéro de publication internationale: WO 2017/068044

(56) Documents cités:
- EP-A1- 2 887 248
- WO-A1-2015/015523
- WO-A2-00/21020
- FR-A1- 2 907 928

## Description

La présente invention concerne le domaine des dispositifs d'authentification.

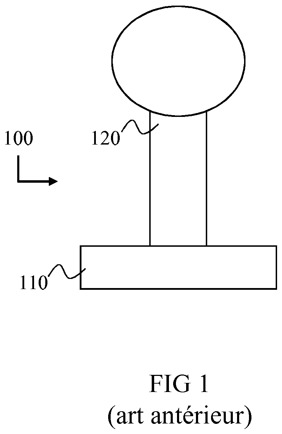

Un tampon encreur 100 tel que représenté en FIG. 1 est un dispositif basique d'authentification ou de signature. Le tampon encreur 100 (ou tampon à encrer) est composé d'un manche 120 permettant la préhension par un utilisateur et d'un timbre 110, le timbre 110 comprenant un motif extérieur en relief. Un tel tampon encreur 100 est classiquement utilisé pour l'authentification de documents. Un utilisateur d'un tampon encreur 100 doit tout d'abord presser le timbre 110 contre un coussin encreur afin que le timbre 110 se recouvre d'une couche d'encre, puis presser le même timbre 110 contre le document à authentifier afin d'y imprimer une marque correspondant au motif du timbre 110. La marque imprimée permet une authentification ou une signature du document. Il existe des tampons encreurs plus perfectionnés, dits tampons auto-encreurs, tel celui décrit dans la demande de brevet français FR 3 016 142. Toutefois, le tampon encreur 100 comme le tampon auto-encreur décrit dans la demande de brevet précédemment citée s'utilise de la même façon, l'utilisateur devant presser plus ou moins fermement le tampon encreur contre le document à authentifier ou à signer. Un exemple classique d'utilisation d'un tampon encreur 100 est la signature par les sociétés des bons de livraison, la signature se faisant par un « coup de tampon » du bon de livraison.

Le niveau d'authentification apporté par de tels dispositifs est très faible, la reproduction du motif d'un timbre étant aisée, ce même motif étant de plus utilisé de façon répétée sans modification. Il est donc possible de le reproduire pour utiliser une reproduction de façon frauduleuse.

De plus, si cette méthode d'authentification basique est encore fréquemment utilisée, elle n'est pas adaptée à la dématérialisation des documents. Il est en effet nécessaire de passer par une première phase où le document est authentifié par l'utilisation d'un tampon encreur puis par une seconde phase où le document authentifié est scanné. Ce processus est long et fastidieux.

Il est donc nécessaire de proposer un dispositif d'authentification qui puisse pallier les inconvénients des tampons encreurs existants tout en préservant la simplicité d'utilisation de ces tampons encreurs.

Le document de l'art antérieur WO00/21020 divulgue une carte à puce destiné à émettre un signal sonore lui permettant de s'authentification auprès d'un système.

Le document de l'art antérieur EP2887248-A1 divulgue un bouton électronique destiné à être utilisé sur un écran capacitif d'une tablette, ce bouton permettant à un utilisateur de s'authentifier sur ladite tablette.

La présente invention concerne un dispositif d'authentification destiné à être utilisé avec un dispositif électronique comprenant un écran tactile capacitif et un récepteur, le dispositif d'authentification étant caractérisé en ce qu'il comprend une pluralité de picots disposés sur une même face du dispositif d'authentification, au moins deux picots étant constitués d'un matériau conducteur, les autres picots étant constitués d'un matériau isolant, tous les picots étant d'un aspect identique, un moyen pour détecter une pression exercée sur au moins un picot et un moyen pour émettre un signal d'authentification destiné à être reçu par le récepteur lorsqu'une pression est détectée, le signal d'authentification étant un signal sonore.

Avantageusement, le dispositif d'authentification peut remplacer un tampon encreur pour son utilisation dans un processus d'authentification dématérialisé. Les picots constitués d'un matériau conducteur permettent une détection, par un écran tactile capacitif d'un dispositif électronique, d'un motif associé à la disposition desdits picots conducteurs. Le moyen pour détecter une pression permet de s'assurer que le signal sonore d'authentification n'est émis que lorsque le dispositif d'authentification est utilisé, par exemple en étant mis au contact de l'écran tactile d'un dispositif électronique. L'utilisation d'une authentification par combinaison entre un signal sonore d'authentification et un motif permet de bénéficier de toutes les possibilités d'une authentification par signal sonore (disponibilité des dispositifs électroniques comprenant un microphone, infinité de code sonore disponible). La combinaison d'une authentification par combinaison entre un signal sonore d'authentification et un motif, cette dernière nécessitant un contact physique, permet de s'assurer que seul le dispositif électronique sur lequel est pressé le dispositif d'authentification peut exécuter un procédé d'authentification avec succès.

Selon un mode de réalisation complémentaire de l'invention, le positionnement géométrique des picots constitués de matériau conducteur constitue un motif, le motif étant associé avec le signal d'authentification.

Ainsi, le dispositif d'authentification offre un niveau de sécurité supplémentaire lors de la détection d'un signal sonore, ledit signal sonore étant associé à un motif. Ainsi, seul le dispositif électronique sur lequel le dispositif d'authentification est pressé, et sur lequel le motif peut être détecté, peut vérifier que le signal sonore et le motif correspondent bien.

Selon un mode de réalisation complémentaire de l'invention, le dispositif d'authentification est au moins partiellement constitué d'un matériau conducteur, une continuité électrique étant assurée avec les picots constitués d'un matériau conducteur.

Ainsi, le dispositif d'authentification, tenu dans une main d'un utilisateur, est utilisable sur un écran tactile capacitif d'un dispositif électronique. La continuité électrique est réalisée entre l'utilisateur et l'écran tactile capacitif.

Selon un mode de réalisation complémentaire de l'invention, le matériau conducteur constituant les picots et/ou le dispositif d'authentification est souple.

Ainsi, le dispositif d'authentification peut être utilisé sans risque de rayer ou abîmer un écran d'un dispositif électronique.

Selon un mode de réalisation complémentaire de l'invention, le dispositif d'authentification comprend un corps monobloc et creux constitué d'un matériau souple et conducteur d'électricité, le corps comprenant au moins une rainure permettant l'insertion d'une plaque d'appui constituée d'un matériau conducteur d'électricité sur laquelle les picots sont en appui, l'intérieur du corps du dispositif d'authentification constituant une cage de Faraday.

Ainsi, le dispositif d'authentification est facile à produire et solide. De même, des composants électroniques placés à l'intérieur du dispositif d'authentification sont protégés des interférences électromagnétiques.

Selon un mode de réalisation complémentaire de l'invention, le dispositif d'authentification comprenant en outre des moyens pour lire une empreinte digitale lorsqu'une pression est détectée sur au moins un picot, le signal d'authentification n'étant émis que si l'empreinte digitale lue correspond à une empreinte digitale prédéterminée.

Ainsi, un niveau de sécurité est apporté, le dispositif d'authentification ne pouvant être utilisé que par un utilisateur prédéterminé.

Selon un mode de réalisation complémentaire de l'invention, au plus quatre picots étant constitués d'un matériau conducteur, les autres picots étant constitués d'un matériau isolant.

Ainsi, un écran tactile capacitif d'un dispositif électronique peut rapidement détecter un motif constitué par les picots constitués d'un matériau conducteur. De plus, la compatibilité du dispositif d'authentification avec des écrans tactiles capacitifs ne pouvant détecter simultanément plus de quatre points de contact est garantie.

La présente invention concerne aussi un procédé d'authentification d'un identifiant associé à un dispositif d'authentification, le procédé étant exécuté par un dispositif électronique comprenant un écran tactile capacitif et un récepteur et comportant les étapes de recevoir la sélection d'un premier identifiant associé à un premier dispositif d'authentification, retrouver un premier signal d'authentification et un premier motif associés au premier identifiant, détecter au moins deux points d'entrée sur l'écran tactile capacitif créés par l'application d'un deuxième dispositif d'authentification sur l'écran tactile capacitif, déterminer un deuxième motif en fonction des points d'entrée détectés, recevoir un deuxième signal d'authentification au moyen du récepteur, authentifier le premier identifiant si le deuxième signal d'authentification est égal au premier signal d'authentification et si le deuxième motif est égal au premier motif.

Selon un mode de réalisation complémentaire de l'invention, l'étape de déterminer un deuxième motif comprend une étape de calculer au moins une distance entre les points d'entrée détectés sur l'écran tactile capacitif.

La présente invention concerne aussi un programme d'ordinateur, qui peut être stocké sur un support et/ou téléchargé d'un réseau de communication, afin d'être lu et exécuté par un processeur ou implémenté dans un microcontrôleur. Ce programme d'ordinateur comprend des instructions pour implémenter le procédé mentionné ci-dessus selon l'une quelconque de ses variantes. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **FIG. 1** illustre schématiquement un tampon encreur connu de l'art antérieur ;
- la **FIG. 2** illustre schématiquement un exemple d'aspect extérieur d'un dispositif d'authentification selon un mode de réalisation de la présente invention ;
- la **FIG. 3** illustre schématiquement un système selon un mode de réalisation de l'invention ;
- la **FIG. 4** illustre schématiquement un exemple d'architecture matérielle d'un dispositif d'authentification selon un mode de réalisation de l'invention ;
- la **FIG. 5** est un organigramme d'un procédé pour émettre un signal d'authentification selon un mode de réalisation de l'invention ;
- la **FIG. 6** illustre schématiquement un exemple d'aspect extérieur d'un dispositif d'authentification selon un mode de réalisation complémentaire de la présente invention ;
- la **FIG. 7** est une vue de dessous du dispositif d'authentification selon le mode de réalisation complémentaire de l'invention illustré en FIG. 6 ;
- la **FIG. 8** illustre schématiquement un exemple d'architecture matérielle d'un dispositif d'authentification selon le mode de réalisation complémentaire de l'invention illustré en FIG. 6 ;
- la **FIG. 9** est un organigramme d'un procédé d'authentification utilisant un dispositif d'authentification selon le mode de réalisation complémentaire de l'invention illustré en FIG. 6 ;
- la **FIG. 10** est une vue en coupe d'un corps d'un dispositif d'authentification selon un mode de réalisation complémentaire de la présente invention ;
- la **FIG. 11** est une illustration d'une pièce destinée à être intégrée dans le dispositif d'authentification tel qu'illustré dans la FIG. 10 ;
- la **FIG. 12** est une vue en coupe d'un picot destiné à être intégré dans le dispositif d'authentification tel qu'illustré dans la FIG. 10.

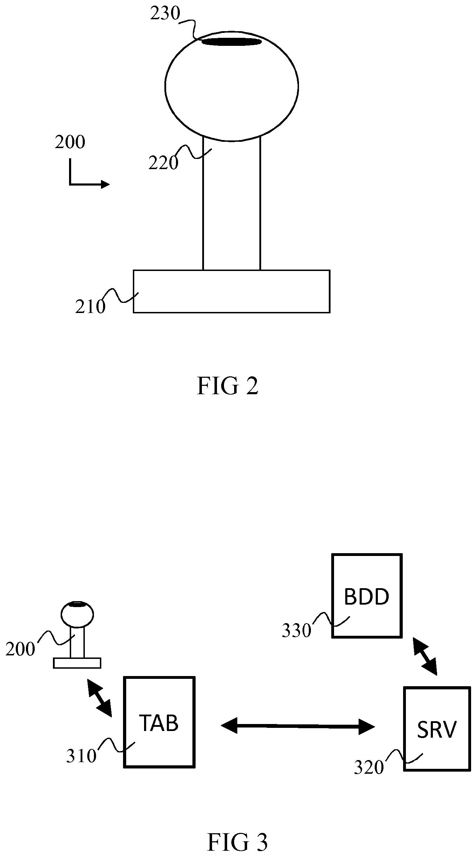

La **FIG. 2** illustre schématiquement un exemple d'aspect extérieur d'un dispositif d'authentification selon un mode de réalisation de la présente invention. Selon ce mode de réalisation, l'aspect extérieur du dispositif d'authentification 200 est très similaire au tampon encreur 100. Le dispositif d'authentification 200 peut ainsi être composé d'un manche 220 et d'une partie 210, dite «timbre », similaire dans sa forme au timbre 110 du tampon encreur 100. Le manche 220 peut être en partie ou totalement télescopique afin de loger en son sein un régulateur d'impulsion mécanique REGM 410 qui est décrit ci-après.

Selon un mode de réalisation de l'invention, le dispositif d'authentification 200 comprend un lecteur d'empreintes digitales 230, par exemple situé sur le dessus du manche 220 afin d'être facilement utilisé par un utilisateur qui peut y poser un doigt, typiquement son pouce.

Selon un mode de réalisation de l'invention, le dispositif d'authentification 200 ne possède aucun moyen d'ouverture ou de désassemblage une fois assemblé ou fabriqué.

Selon un mode de réalisation de l'invention, le dispositif d'authentification 200 possède une interface externe de communication, telle que par exemple un port USB (*Universal Serial Bus* en anglais) ou une interface sans-fil de type communication en champ proche (*Near Field Communication* - NFC - en anglais), non représentée ici, lui permettant par exemple d'être configuré. Alternativement, le dispositif d'authentification 200 ne possède aucune interface externe de communication. Dans ce cas, une configuration du dispositif d'authentification 200, c'est-à-dire des composants internes du dispositif d'authentification 200 tels qu'ils sont décrits ci-après, peut être faite avant que le corps du dispositif d'authentification 200 ne soit totalement assemblé, et par exemple soudé.

La **FIG. 3** illustre schématiquement un système selon un mode de réalisation de l'invention, le système étant composé d'un premier dispositif d'authentification 200 tel que décrit précédemment, d'un deuxième dispositif TAB 310 pouvant recevoir un signal d'authentification émis par ledit premier dispositif d'authentification 200 et d'un serveur SRV 320, ledit serveur SRV 320 comprenant ou pouvant accéder à une base de données BDD 330. Ainsi, selon ce mode de réalisation de l'invention, le dispositif TAB 310 est typiquement une tablette numérique ou un téléphone intelligent (*smartphone* en anglais) exécutant une application permettant une gestion dématérialisée de signatures ou signaux d'authentification. Avantageusement, le dispositif TAB 310 peut être une tablette numérique ou un *smartphone* communément disponible dans le commerce si par exemple le dispositif d'authentification 200 émet un signal d'authentification sonore. En effet, un microphone du dispositif TAB 310 est alors utilisé pour capter ce signal d'authentification.

Selon un scénario d'utilisation du dispositif d'authentification 200 possible, le dispositif TAB 310 est utilisé pour recevoir une signature, par exemple si ce dispositif est utilisé par des facteurs distribuant du courrier et désirant donner un courrier en échange d'une signature d'un client utilisateur du dispositif d'authentification 200. L'application sur le dispositif TAB 310 met le dispositif TAB 310 en écoute d'un éventuel signal d'authentification sonore (le signal sonore pouvant être émis dans la bande des ultrasons). L'utilisateur du dispositif d'authentification 200 reproduit une gestuelle d'utilisation d'un tampon encreur classique 100 au-dessus du dispositif TAB 310, la gestuelle permettant, comme décrit ci-après, une alimentation en énergie du dispositif d'authentification 200 et une émission d'un signal sonore d'authentification. Ce signal sonore d'authentification peut être de faible intensité, à la fois car le dispositif d'authentification 200 dispose de faibles ressources en énergie mais aussi pour préserver la confidentialité de l'émission du signal sonore d'authentification qui est ainsi moins facilement capté à grande distance. Dit autrement, un signal sonore d'authentification de faible intensité garantit une plus grande confidentialité mais nécessite une proximité lors de l'émission dudit signal sonore entre le dispositif d'authentification 200 et le dispositif TAB 310. Le dispositif TAB 310, recevant via un microphone le signal sonore d'authentification, calcule une première information, comprenant par exemple un identifiant du dispositif d'authentification 200, et envoie une requête au serveur SRV 320 contenant cette première information. Le serveur SRV 320, à partir de la première information reçue, et en interrogeant la base de données BDD 330, retrouve une ou des informations d'identification associées à la première information. Le serveur SRV 320 envoie au dispositif TAB 310 ces informations d'identification, qui permettent ainsi à l'application exécutée par le dispositif TAB 310 de signer la réception de la lettre par le client utilisateur du dispositif d'authentification 200.

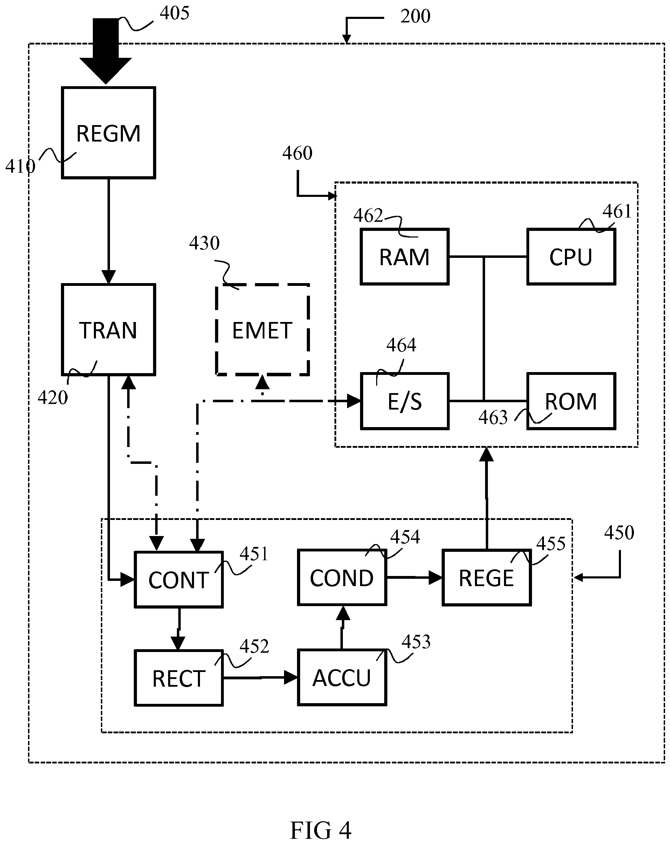

La **FIG. 4** illustre schématiquement un exemple d'architecture matérielle d'un dispositif d'authentification 200 selon un mode de réalisation particulier de l'invention. Dans ce mode de réalisation, le dispositif d'authentification 200 comporte un régulateur d'impulsion mécanique REGM 410, un transducteur électromécanique TRAN 420, un module d'alimentation électrique 450, un microcontrôleur 460 et possiblement un émetteur EMET 430. Dans la FIG. 4, une flèche 405 symbolise une mise en mouvement du dispositif d'authentification 200, provoquée par exemple par un utilisateur. La mise en mouvement du dispositif d'authentification 200 peut être faite par l'utilisateur en tenant le dispositif d'authentification 200 par le manche 220 précédemment décrit et en imprimant au dispositif d'authentification 200 un geste similaire à celui d'un « coup de tampon » utilisé avec le tampon encreur 100.

Le régulateur d'impulsion mécanique REGM 410 est un dispositif mécanique permettant de transformer un geste ou une mise en mouvement du dispositif d'authentification 200 de caractéristique potentiellement aléatoire en une impulsion mécanique de caractéristiques prédéterminées lors de chaque utilisation du dispositif d'authentification 200 par un utilisateur. La transformation de la mise en mouvement en une impulsion mécanique de caractéristiques prédéterminées peut comprendre une phase intermédiaire d'accumulation et de stockage d'une énergie mécanique associée à la mise en mouvement. Par exemple, le régulateur d'impulsion mécanique REGM 410 permet de générer une impulsion mécanique constante, correspondant à un armement, par le geste de mise en mouvement du dispositif d'authentification 200 par un utilisateur, puis à un relâchement d'un percuteur monté par exemple sur un ressort. Ainsi, une impulsion mécanique constante est générée par le régulateur d'impulsion mécanique REGM 410 suite à une mise en mouvement par un geste unique ou de multiples gestes d'un utilisateur du dispositif d'authentification 200, par exemple par un ou des appuis du dispositif d'authentification 200 sur une surface solide telle que le dispositif TAB 310. La mise en mouvement peut se faire avec une gestuelle similaire à l'utilisation d'un tampon encreur 100, par exemple par un appui du dispositif d'authentification 200 sur le dispositif TAB 310, le régulateur d'impulsion mécanique REGM 410 permettant de convertir cet appui, potentiellement de durée ou de pression variable, en une impulsion mécanique homogène, c'est-à-dire de caractéristiques globalement constantes. Dit autrement, les caractéristiques de l'impulsion mécanique en sortie du régulateur d'impulsion mécanique REGM 410 sont globalement similaires lors de chaque utilisation du dispositif d'authentification 200.

Selon un autre mode de réalisation de l'invention, complémentaire ou alternatif, la mise en mouvement du dispositif d'authentification 200 se fait selon un mouvement rectiligne, par exemple dans l'axe du manche 220, le mouvement pouvant comprendre des mouvements d'aller-retour. Le régulateur d'impulsion mécanique REGM 410 peut comprendre une masselotte oscillante. La mise en mouvement du dispositif d'authentification 200 permet la mise en mouvement de la masselotte oscillante et l'armement d'un ressort accumulant l'énergie mécanique. Dans ce mode de réalisation, le dispositif d'authentification 200 comprend un détecteur (non représenté), par exemple un interrupteur, placé sur la partie dite timbre 210 du dispositif d'authentification 200. Le détecteur permet de détecter l'appui du dispositif d'authentification 200 sur une surface, par exemple une surface du dispositif TAB 310 et de relâcher un percuteur, libérant ainsi l'impulsion mécanique quand le dispositif d'authentification 200 est en appui sur le dispositif TAB 310. Le détecteur, par exemple un interrupteur, permet ainsi de s'assurer que le dispositif d'authentification 200 est à une distance proche du dispositif TAB 310 afin de permettre l'échange de signaux sonores. Là encore, les caractéristiques de l'impulsion mécanique en sortie du régulateur d'impulsion mécanique REGM 410 sont globalement similaires lors de chaque utilisation du dispositif d'authentification 200.

Le transducteur électromécanique TRAN 420 reçoit en entrée l'impulsion mécanique en sortie du régulateur d'impulsion mécanique REGM 410. Le transducteur électromécanique TRAN 420 est un dispositif de type générateur électrique permettant de convertir l'impulsion mécanique reçue en entrée en une impulsion électrique. Le transducteur électromécanique TRAN 420 peut par exemple être un transducteur électromécanique de type piézoélectrique mettant en œuvre, pour convertir l'impulsion mécanique en une impulsion électrique, un effet piézoélectrique dit « *direct* ». Le transducteur électromécanique TRAN 420 peut ainsi être une céramique ou un composite piézoélectrique. Le transducteur électromécanique TRAN 420 peut aussi être une machine dynamoélectrique, dite micro-dynamo, ou un alternateur. Le transducteur électromécanique TRAN 420 permet donc de convertir une énergie mécanique en une énergie électrique, dans le but, comme expliqué ci-après, de pouvoir alimenter en énergie électrique un microcontrôleur. La sortie du transducteur électromécanique TRAN 420 est donc une impulsion électrique correspondant à l'impulsion mécanique reçue en entrée.

Le module d'alimentation électrique 450 reçoit l'impulsion électrique générée par le transducteur électromécanique TRAN 420. Le module d'alimentation électrique 450 a pour fonctionnalité de convertir l'impulsion électrique reçue en entrée du module d'alimentation électrique 450 en une alimentation électrique adaptée à une alimentation d'un microcontrôleur 460. Le module d'alimentation électrique 450 permet d'absorber les surtensions électriques liées à l'arrivée d'une énergie électrique sous forme d'impulsion électrique en provenance du transducteur électromécanique TRAN 420 et d'accumuler cette énergie électrique afin de pouvoir la délivrer au microcontrôleur 460 avec une tension adaptée au microcontrôleur 460 pendant une période de temps suffisante pour que le microcontrôleur 460 puisse exécuter les instructions nécessaires au déroulement d'un processus d'émission d'un signal d'authentification.

Selon un mode de réalisation de l'invention particulier, le module d'alimentation électrique comporte un contrôleur de signaux électriques CONT 451, un rectificateur d'impulsion électrique RECT 452, un accumulateur d'énergie électrique ACCU 453, un conditionneur de flux électrique COND 454 et un régulateur de flux électrique REGE 455. Le contrôleur de signaux électriques CONT 451 reçoit en entrée l'impulsion électrique fournie par le transducteur électromécanique TRAN 420 et la transmet au rectificateur d'impulsion électrique RECT 452. Le rectificateur d'impulsion électrique RECT 452 permet de convertir un signal électrique correspondant à l'impulsion électrique reçue, qui est un signal alternatif, en un signal positif ou redressé. Le rectificateur d'impulsion électrique RECT 452 peut comprendre un redresseur électrique ou un convertisseur de type alternatif vers continu. L'accumulateur d'énergie électrique ACCU 453 reçoit le signal électrique ainsi redressé par le rectificateur d'impulsion électrique RECT 452 et permet de stocker une énergie électrique correspondant au signal électrique ainsi reçu. L'accumulateur d'énergie électrique ACCU 453 peut par exemple comprendre un condensateur ou une batterie rechargeable. L'énergie électrique est ainsi stockée par l'accumulateur d'énergie électrique ACCU 453 de façon temporaire ou permanente suivant la technologie utilisée par l'accumulateur d'énergie électrique ACCU 453. Le conditionneur de flux électrique COND 454 permet de gérer l'énergie électrique stockée dans l'accumulateur d'énergie électrique ACCU 453, c'est-à-dire de libérer cette énergie accumulée quand une ou plusieurs conditions prédéterminées sont remplies. Par exemple, le conditionneur de flux électrique COND 454 peut comporter un détecteur de tension électrique aux bornes de l'accumulateur d'énergie électrique ACCU 453, et conditionner la libération de l'énergie électrique stockée à l'atteinte d'une certaine tension électrique. Ainsi, le régulateur de flux électrique REGE 455 ne reçoit l'énergie électrique stockée dans l'accumulateur d'énergie électrique ACCU 453 que si par exemple cette énergie se trouve stockée en quantité suffisamment grande. Une représentation de l'énergie stockée par l'accumulateur d'énergie électrique ACCU 453 peut par exemple être obtenue par une mesure d'une tension aux bornes de l'accumulateur d'énergie électrique ACCU 453. Ainsi, selon un mode de réalisation de l'invention, le régulateur de flux électrique REGE 455 ne reçoit l'énergie électrique stockée dans l'accumulateur d'énergie électrique ACCU 453 que si la tension aux bornes de l'accumulateur d'énergie électrique ACCU 453 est supérieure à une valeur prédéterminée. Le régulateur de flux électrique REGE 455 a pour fonction de mettre en forme l'énergie électrique reçue avant sa microcontrôleur 460 afin d'alimenter ce dernier en énergie électrique. La mise en forme peut comprendre une adaptation d'une tension d'alimentation électrique du microcontrôleur 460 par exemple. En effet, le microcontrôleur 460 peut nécessiter d'être alimenté sous une certaine tension pour fonctionner correctement. Les dispositifs 453, 455 et 456 permettent donc de s'assurer qu'une quantité suffisante d'énergie est stockée dans l'accumulateur d'énergie électrique ACCU 453 pour alimenter le microcontrôleur 460, cette énergie électrique étant mise en forme avant d'alimenter le microcontrôleur 460 par le régulateur d'énergie électrique REGE 455. Le module d'alimentation électrique permet ainsi d'alimenter pendant une certaine durée et sous des caractéristiques prédéterminées le microcontrôleur 460 (par exemple une tension en entrée du microcontrôleur 460).

Le microcontrôleur 460 est un dispositif électronique qui comprendre une unité programmable de traitement de données (*Central Processing Unit* en anglais) CPU 461, une mémoire vive (*Random Access Memory* en anglais) RAM 462, une mémoire, ou module de stockage, de type non volatile ROM 463 et une ou plusieurs interfaces d'entrée/sortie E/S 464. Les interfaces E/S 464 peuvent comprendre des convertisseurs de signaux analogiques-numériques (Convertisseur Analogique Numérique ; CAN) ou numériques-analogiques (Convertisseur Numérique Analogique ; CNA), lesquels peuvent comprendre un module de modulation de largeur d'impulsions (MLI ou *Pulse Width Modulation* - PWM - en anglais). Lorsqu'il est alimenté électriquement par le module d'alimentation électrique 450, le microcontrôleur 460 est adapté pour générer une émission d'un premier signal électrique en sortie d'une interface de sortie E/S 464, le premier signal électrique correspondant au signal d'authentification à émettre.

Selon des modes de réalisation alternatifs, les fonctionnalités du microcontrôleur 460 sont remplies par un circuit logique programmable (*Field-Programmable Gate Arrays* - FPGA - en anglais), un processeur de signal numérique (*Digital Signal Processor* - DSP - en anglais), un circuit intégré propre à une application *(Application-Specific Integrated Circuit* - ASIC - en anglais) ou tout autre dispositif équivalent.

Selon un mode de réalisation particulier, ladite interface E/S 464 est connectée à un émetteur EMET 430, lequel émet alors le signal d'authentification. Selon la nature de l'émetteur EMET 430, il peut s'agir d'un signal de type sonore (émetteur EMET 430 de type haut-parleur par exemple), visuel (émetteur EMET 430 de type diode électroluminescente par exemple) ou de tout autre type.

Selon un mode de réalisation de l'invention, l'émetteur EMET 430 est un émetteur compatible avec des technologies de type radio comme par exemple le *Bluetooth*®, communication en champ proche (*Near Field Communication* - NFC - en anglais) ou radio-identification (*Radio Frequency Identification* - RFID - en anglais). Selon un mode de réalisation complémentaire, l'émetteur EMET 430 est un émetteur-récepteur, c'est-à-dire qu'il peut aussi recevoir un signal et permettre des communications bidirectionnelles.

Ce signal d'authentification a donc vocation à être reçu par le dispositif TAB 310, lequel comporte un moyen de réception adapté au signal émis, par exemple un microphone dans le cas d'un signal d'authentification sonore. L'utilisation d'un signal d'authentification de type sonore permet donc une vaste compatibilité des usages du dispositif d'authentification 200 avec des dispositifs TAB 310, ceux-ci comprenant très fréquemment un microphone.

Selon un mode de réalisation complémentaire, une information prédéterminée est enregistrée dans la mémoire non volatile ROM 463 du microcontrôleur 460. Cette information peut être enregistrée dans la mémoire lors du processus de fabrication du dispositif d'authentification 200 ou lors d'une phase ultérieure de configuration du dispositif d'authentification 200, par exemple au moyen d'une interface de programmation non représentée. L'information prédéterminée peut comprendre plusieurs informations comme un identificateur du dispositif d'authentification 200 ou une clef de chiffrement.

Selon un mode de réalisation, la mémoire non volatile ROM 463 est de type non réinscriptible, il n'est donc plus possible de modifier ou d'effacer l'information prédéterminée une fois que celle-ci est enregistrée.

Il est à noter que selon un mode de réalisation, un programme comprenant des instructions de fonctionnement du microcontrôleur est enregistré dans cette mémoire non volatile et non réinscriptible ROM 463. Cela permet de prémunir contre toute modification du mode de fonctionnement du dispositif d'authentification 200. Ainsi, lorsque le microcontrôleur 460 est alimenté par le module d'alimentation électrique 450, le microcontrôleur 460 peut être adapté pour retrouver l'information prédéterminée enregistrée sur le module de stockage ou mémoire ROM 463 et générer à partir de cette information prédéterminée l'émission d'un premier signal électrique correspondant au signal d'authentification à émettre.

Selon un mode de réalisation, le microcontrôleur 460 incrémente lors de chaque utilisation un premier compteur dont la valeur peut être stockée sur la mémoire ROM 463. Le signal électrique peut être généré à partir de la valeur de ce premier compteur, incrémentée à chaque utilisation, et d'un identifiant et d'une clef de chiffrement compris dans l'information prédéterminée. Ainsi, le premier signal électrique est différent lors de chaque utilisation, et donc le signal d'authentification émis, ce qui réduit les possibilités d'attaque de type « attaque par rejeu » (*replay attack* en anglais) dans un système constitué par le dispositif d'authentification 200, le dispositif TAB 310 et le serveur SRV 320. Pour cela, le dispositif TAB 310 peut garder en mémoire la dernière valeur reçue du premier compteur et vérifier lors de la réception d'un nouveau signal d'authentification que la nouvelle valeur reçue du premier compteur est bien différente ou supérieure à la valeur précédente gardée en mémoire. Dans le cas d'un premier compteur dont la valeur est incrémentée à chaque émission d'un signal d'authentification par le dispositif d'authentification 200, si la valeur du premier compteur d'un signal d'authentification reçu est inférieure ou égale à la valeur précédemment gardée en mémoire par le dispositif TAB 310, cela signifie que ledit signal d'authentification reçu est un signal d'authentification rejoué ; le dispositif TAB 310 doit dans ce cas refuser l'authentification.

Selon un mode de réalisation particulier de la présente invention, le transducteur électromécanique TRAN 420 est un transducteur électromécanique de type piézoélectrique. Ce transducteur électromécanique TRAN 420 est alors aussi utilisé comme émetteur EMET 430 pour l'émission du signal d'authentification, le signal d'authentification étant de type sonore. Selon ce mode de réalisation, le module d'alimentation électrique 450 est connecté au transducteur électromécanique TRAN 420 et au microcontrôleur 460.

Dans ce mode de réalisation, le module d'alimentation électrique 450 permet de recevoir l'impulsion électrique en provenance du transducteur électromécanique TRAN 420 de type piézoélectrique afin de générer l'alimentation électrique du microcontrôleur 460 tout en protégeant ce même microcontrôleur de toute surtension et de transmettre le premier signal électrique émis par le microcontrôleur vers le transducteur électromécanique TRAN 420 de type piézoélectrique, utilisé comme émetteur EMET 430, afin de générer le signal d'authentification de type sonore. Selon un mode de réalisation plus particulier de ce mode de réalisation, c'est le contrôleur de signaux électriques CONT 451 du module d'alimentation électrique 450 qui est adapté pour recevoir l'impulsion électrique en provenance du transducteur électromécanique TRAN 420 afin de générer l'alimentation électrique tout en protégeant le microcontrôleur 460 et de transmettre le premier signal électrique en provenance du microcontrôleur 460 vers le transducteur électromécanique TRAN 420, utilisé comme émetteur EMET 430, afin de générer le signal d'authentification de type sonore. Ces derniers modes de réalisation mettent à profit les capacités d'un transducteur piézoélectrique à pouvoir être utilisé alternativement dans un mode dit « *direct »* (génération d'une tension électrique sous l'action d'une contrainte mécanique) ou dans un mode dit « *inverse* » (déformation du transducteur piézoélectrique lorsqu'on lui applique une tension électrique). Les déformations du transducteur électromécanique TRAN 420 de type piézoélectrique sont alors utilisées pour générer un signal sonore. Utiliser un même élément pour deux fonctions différentes (transducteur électromécanique TRAN 420 et émetteur EMET 430) permet de réduire le coût de fabrication et l'encombrement du dispositif d'authentification 200.

Selon un mode de réalisation supplémentaire de l'invention, le transducteur électromécanique TRAN 420 de type piézoélectrique est adapté pour capter un signal sonore, correspondant à un message, et transmettre vers le module d'alimentation électrique 450 un deuxième signal électrique correspondant au signal sonore capté par le transducteur électromécanique TRAN 420 de type piézoélectrique, le module d'alimentation électrique 450 étant adapté pour transmettre vers le microcontrôleur 460 ce deuxième signal électrique, le microcontrôleur 460 étant adapté pour traiter ce deuxième signal électrique, correspondant à un message. Par exemple le microcontrôleur 460 peut générer un troisième signal électrique correspondant à un signal sonore à émettre ou enregistrer dans la mémoire RAM 462 ou ROM 463 une information extraite du deuxième signal électrique ou message. Une utilisation de cette fonctionnalité de réception d'un message associé au deuxième signal électrique est décrite ci-après pour l'enregistrement d'informations d'identification d'un utilisateur dans la mémoire non volatile ROM 463.

Selon un mode de réalisation complémentaire, le dispositif d'authentification 200 comprend un lecteur d'empreintes digitales 230. Ce lecteur d'empreintes digitales 230 permet de conditionner l'émission du signal sonore d'authentification à la détection d'une ou plusieurs empreintes digitales prédéterminées. Cela permet d'offrir un niveau de sécurité supplémentaire, en garantissant que l'utilisateur du dispositif d'authentification 200 est autorisé à s'en servir. Ainsi, des informations correspondant aux empreintes digitales des utilisateurs autorisés à se servir du dispositif d'authentification 200 peuvent être préalablement enregistrées dans la mémoire non volatile ROM 463 lors de la phase de fabrication ou lors d'une phase ultérieure de configuration. Si, lors de l'utilisation du dispositif d'authentification 200, aucune empreinte correspondant à une empreinte enregistrée sur la mémoire non volatile ROM 463 n'est retrouvée par le microcontrôleur 460, alors le processus d'émission du signal d'authentification est stoppé, sans émission de signal d'authentification. Selon un mode de réalisation de l'invention complémentaire, un signal prédéterminé, correspondant à un code d'erreur, est alors émis à la place du signal d'authentification. Selon un mode de réalisation de l'invention alternatif, un signal aléatoire est émis à la place du signal d'authentification.

Selon un mode de réalisation complémentaire de l'invention, des données correspondant à l'empreinte digitale lue par le lecteur d'empreintes digitales 230 sont comprises dans le signal d'authentification émis par le dispositif d'authentification 200. La fonctionnalité de vérification de l'empreinte digitale à partir des données correspondant à l'empreinte digitale lue peut donc être déportée auprès du dispositif TAB 310 ou du serveur SRV 320.

Selon un mode de réalisation de l'invention, le dispositif d'authentification 200 comprend un premier indicateur, s'éclairant lorsque l'énergie électrique accumulée par le module d'alimentation électrique 450 est suffisante pour alimenter le microcontrôleur 460. Le premier indicateur fourni donc une information indiquant si l'énergie accumulée par le module d'alimentation électrique 450 est suffisante. Ainsi, lorsque suite à un ou plusieurs mouvements du dispositif d'authentification 200, la diode électroluminescente ne s'éclaire pas, l'utilisateur du dispositif d'authentification 200 en déduit que le dispositif d'authentification 200 n'est pas capable d'émettre le signal d'authentification, ce qui l'invite à renouveler son mouvement.

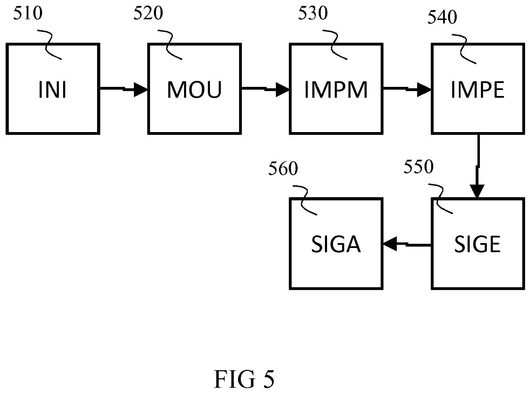

La **FIG. 5** est un organigramme d'un procédé pour émettre un signal d'authentification selon un mode de réalisation de l'invention. Le procédé peut être exécuté par un dispositif tel que le dispositif d'authentification 200 décrit dans le présent document.

Une première étape INI 510 correspond à une phase d'initialisation du dispositif d'authentification 200. Cette première étape peut être réalisée lors de la fabrication du dispositif d'authentification 200 et comprend l'enregistrement dans la mémoire non volatile ROM 463 du microcontrôleur 460 d'un microprogramme ou programme d'ordinateur comprenant des instructions permettant l'exécution du procédé pour émettre un signal d'authentification. Cette première étape peut comprendre aussi l'enregistrement dans la mémoire non volatile ROM 463 d'une information prédéterminée. Cette information prédéterminée peut comprendre un identifiant unique associé au dispositif d'authentification 200 et une clef de chiffrement. L'information prédéterminée peut aussi comprendre toute information permettant l'identification de l'utilisateur du dispositif d'authentification 200, par exemple un nom d'une société ou de l'utilisateur. Si cette information n'est pas disponible lors de l'étape de fabrication ou d'initialisation du dispositif d'authentification 200, il est possible via une procédure décrite ci-après d'enregistrer des informations dans une phase ultérieure.

Une deuxième étape MOU 520 correspond à une mise en mouvement du dispositif d'authentification 200 par un utilisateur. Cette mise en mouvement peut répondre à certaines contraintes suivant le mode de réalisation de la présente invention. Dans un mode de réalisation préféré, la mise en mouvement se fait suivant une gestuelle similaire à celle d'utilisation du tampon encreur 100.

Une étape IMPM 530 suivante correspond à une conversion du ou des mouvements appliqués au dispositif d'authentification 200 lors de l'étape MOU 520 précédente en une impulsion mécanique de caractéristiques prédéterminées. Cette conversion peut être réalisée par le régulateur d'impulsion mécanique REGM 410 tel que décrit précédemment.

Une étape suivante IMPE 540 correspond à une conversion de ladite impulsion mécanique en une impulsion électrique. Cette conversion peut être réalisée par le transducteur électromécanique TRAN 420 tel que décrit précédemment.

Dans une étape suivante SIGE 550, une alimentation électrique de caractéristique prédéterminée adaptée pour alimenter des moyens pour générer un premier signal électrique correspondant au signal d'authentification à émettre est générée à partir de ladite impulsion électrique. Le module d'alimentation électrique 450 précédemment décrit peut réaliser cette étape SIGE 550.

Dans une étape SIGA 560, le dispositif d'authentification 200 émet le signal d'authentification à partir du premier signal électrique généré lors de l'étape précédente. Selon un mode de réalisation de l'invention, un émetteur EMET 430 émet le signal. Selon un autre mode de réalisation de l'invention, le transducteur électromécanique TRAN 420 est un transducteur piézoélectrique et est aussi utilisé pour émettre le signal d'authentification sonore.

Selon un mode de réalisation de l'invention où il est nécessaire de finaliser la configuration du dispositif d'authentification 200 après la phase de fabrication, par exemple pour renseigner la partie de l'information prédéterminée enregistrée dans la mémoire non volatile ROM 463 comprenant des informations d'identification d'un utilisateur, il est possible de mettre à profit la capacité de réception d'un signal sonore par le transducteur électromécanique TRAN 420 de type piézoélectrique. Ainsi, en retour de l'émission par le dispositif d'authentification 200 d'un signal d'authentification, le dispositif TAB 310 émet un signal sonore, correspondant à un message comprenant une information d'identification, qui est capté par le transducteur électromécanique TRAN 420 de type piézoélectrique. Le message correspondant à ce signal sonore est reçu, sous forme d'un signal électrique par le microcontrôleur 460 et traité. Le microcontrôleur 460 retrouve dans le message l'information d'identification de l'utilisateur et enregistre cette information en association avec l'information prédéterminée dans la mémoire non volatile ROM 463. Selon un mode de réalisation de l'invention, tout ou partie de la mémoire non volatile ROM 463 est non réinscriptible, c'est-à-dire qu'une information enregistrée dans la mémoire non volatile ROM 463 ne peut plus ensuite être modifiée ni effacée.

Selon un mode de réalisation complémentaire de l'invention, le dispositif TAB 310 émet le signal sonore, correspondant au message comprenant une information d'identification, le message comprenant aussi une valeur correspondant à un deuxième compteur. Le microcontrôleur 460 retrouve dans le message cette valeur pour le deuxième compteur et l'enregistre dans une partie réinscriptible de la mémoire non volatile ROM 463. La valeur de ce deuxième compteur correspond à une limitation du nombre d'utilisations du dispositif d'authentification 200 pour générer un signal d'authentification. Ainsi, lors de chaque génération d'un signal d'authentification, le dispositif d'authentification 200 décrémente la valeur du deuxième compteur enregistrée dans la mémoire non volatile ROM 463. Lorsque la valeur du deuxième compteur atteint une valeur prédéterminée, par exemple zéro, le dispositif d'authentification 200 se bloque, empêchant toute nouvelle génération d'un signal d'authentification. Dit autrement, lors de l'étape de génération d'un signal d'authentification, le microcontrôleur 460 retrouve la valeur du deuxième compteur et la compare à une valeur prédéterminée. Si la valeur du deuxième compteur est inférieure, ou possiblement égale, à la valeur prédéterminée, alors le microcontrôleur annule la génération du signal d'authentification, générant possiblement à la place un signal d'erreur prédéterminé ou un signal aléatoire. Il est alors nécessaire de recommencer la procédure d'initialisation de la valeur du deuxième compteur avec un dispositif TAB 310 pour réactiver le dispositif d'authentification 200, la réactivation étant valable pour un nombre d'utilisations, c'est-à-dire de générations d'un signal d'authentification, dépendant de la nouvelle valeur du deuxième compteur. Dit autrement, le dispositif d'authentification 200 enregistre sur la mémoire non volatile ROM 463 une valeur correspondant à un deuxième compteur et décrémente cette valeur à chaque utilisation du dispositif d'authentification 200 pour générer un signal d'authentification. Le dispositif d'authentification 200 bloque la génération d'un signal d'authentification lorsque la valeur du deuxième compteur atteint une valeur prédéterminée.

Selon un mode de réalisation complémentaire, le dispositif d'authentification 200 comprend un module de type horloge (non représenté) connecté ou intégré au microcontrôleur 460. Ce module horloge peut comprendre une batterie ou pile lui assurant une autonomie en énergie. Par exemple une pile au lithium peut permettre une durée de vie de fonctionnement du module horloge de l'ordre de dix à vingt années. Le module horloge fournit au microcontrôleur 460 des informations temporelles de type heure ou date. Le microcontrôleur 460 peut utiliser ces informations temporelles issues du module horloge pour la génération du premier signal électrique correspondant au signal d'authentification. En complément, des informations de type date ou heure peuvent être enregistrées sur la mémoire non volatile ROM 463. Ces informations peuvent être enregistrées dans une partie de la mémoire non volatile ROM 463 qui est réinscriptible ou au contraire dans une partie de la mémoire non volatile ROM 463 qui n'est pas réinscriptible. Dans le premier cas, le microcontrôleur 460 peut mettre à jour ces informations à partir de messages reçus. Ces informations permettent de contrôler le fonctionnement du dispositif d'authentification 200. Ainsi, le microcontrôleur 460 peut intégrer une étape de vérification de la date ou de l'heure courante pour générer l'émission d'un signal d'authentification. Si la date ou l'heure courante, correspondant aux informations temporelles issue du module horloge, ne correspond pas à des critères prédéterminés dépendant des informations de type heure ou date enregistrées sur la mémoire non volatile ROM 463, le microcontrôleur 460 annule ou bloque l'émission du signal d'authentification. Selon un scénario d'utilisation, le dispositif d'authentification 200 comprend ainsi une date, enregistrée sur la mémoire non volatile 463 au-delà de laquelle le microcontrôleur 460 bloquera l'émission de signal d'authentification. Ce scénario permet donc contrôler la durée de vie du dispositif d'authentification 200, le rendant inopérant passée une certaine date. Selon un autre scénario complémentaire, l'émission de signal d'authentification n'est autorisée que pendant certains jours, par exemple du lundi au vendredi, ou pendant certaines plages horaires, par exemple pendant les heures de travail. Selon un autre scénario d'utilisation complémentaire, le dispositif d'authentification 200 génère un signal d'authentification différent suivant les informations temporelles issues du module horloge. Ainsi, un premier signal d'authentification peut être émis pendant une première plage horaire, correspondant par exemple à un premier identifiant, et un deuxième signal d'authentification hors de cette première plage horaire, correspondant à un deuxième identifiant. En complément, des informations temporelles issues du module horloge peuvent être chiffrées avec la clef de chiffrement du dispositif d'authentification 200 et intégrées au signal d'authentification émis. Selon un mode de réalisation de l'invention, le serveur SRV 320 peut valider un signal d'authentification transmis en utilisant les informations temporelles chiffrées transmises. Par exemple, le serveur SRV 320 peut valider un signal d'authentification si l'écart temporel entre l'heure local du serveur SRV 320 et les informations temporelles reçues chiffrées est inférieur à une valeur prédéterminée.

Selon un mode alternatif de réalisation de l'invention, le dispositif d'authentification 200 comprend un récepteur (non représenté). Ce récepteur peut par exemple être de type cellule photoélectrique, il peut alors capter ou recevoir un signal lumineux. Une telle cellule photoélectrique peut par exemple comporter un récepteur à diode, une photodiode ou un phototransistor. Ce récepteur est connecté au microcontrôleur 460 et permet de lui transmettre un signal électrique correspondant à un signal lumineux reçu. Ce récepteur peut être utilisé alternativement au transducteur électromécanique TRAN 420 de type piézoélectrique, pour la seule fonction de réception d'un signal, dans un mode de réalisation où le dispositif TAB 310 émet un signal de type lumineux et non un signal sonore.

Selon un mode de réalisation complémentaire de l'invention, le récepteur est l'émetteur EMET 430, c'est-à-dire que l'émetteur EMET 430 est un émetteur-récepteur.

Selon un mode de réalisation complémentaire de la présente invention, le microcontrôleur 460 génère le premier signal électrique à partir d'informations comprises dans un message précédemment reçu. Il peut s'agir typiquement d'une information de type «jeton unique » (*token* en anglais). Selon ce mode de réalisation de l'invention, le message peut être reçu via un signal sonore capté par le transducteur électromécanique TRAN 420, de type piézoélectrique, ou via un signal lumineux reçu par un récepteur permettant de capter des signaux lumineux. L'information comprise dans le message peut être extraite par le microcontrôleur et chiffrée en utilisant la clef de chiffrement enregistrée dans la mémoire non volatile ROM 463 afin de générer le signal d'authentification. Ainsi, un dispositif TAB 310 recevant le signal d'authentification, ou le serveur SRV 320 auquel serait transmis le signal d'authentification, pourrait vérifier l'authenticité du dispositif d'authentification 200 en vérifiant que la clef de chiffrement utilisée par le dispositif d'authentification 200 est bien la clef de chiffrement associée au dispositif d'authentification 200. Dans ce mode de réalisation l'information comprise dans le message est une information de type «jeton unique » et le procédé d'authentification du dispositif d'authentification 200 comprend par exemple les étapes de :
- association préalable par le serveur SRV 320 d'un identifiant d'un dispositif d'authentification 200 avec une clef de chiffrement, l'identifiant et la clef de chiffrement étant enregistrés dans une base de données BDD 330 et enregistrés dans la mémoire non volatile ROM 463 lors de la phase de fabrication ou d'initialisation du dispositif d'authentification 200,
- envoi par le dispositif d'authentification 200 d'un premier signal au dispositif TAB 310, ce premier signal peut être un signal d'authentification généré sans chiffrement d'un quelconque jeton unique, ou bien tout autre signal prédéterminé informant le dispositif TAB 310 qu'un jeton unique doit être envoyé au dispositif d'authentification 200 pour la génération d'un signal d'authentification,
- réception par le dispositif TAB 310 du premier signal,
- envoi par le dispositif TAB 310 au serveur SRV 320 d'une requête demandant un jeton unique,
- envoi d'un jeton unique par le serveur SRV 320 au dispositif TAB 310,
- réception par le dispositif TAB 310 du jeton unique,
- émission par le dispositif TAB 310 d'un message, sonore ou lumineux suivant le mode de réalisation de l'invention, à destination du dispositif d'authentification 200, le message comprenant le jeton unique,
- réception par le dispositif d'authentification 200 du message et génération en retour d'un signal d'authentification comprenant l'identifiant du dispositif d'authentification 200 et le jeton unique chiffré avec la clef de chiffrement retrouvée dans la mémoire non volatile ROM 463,
- réception par le dispositif TAB 310 du signal d'authentification et extraction de l'identifiant et du jeton unique chiffré, puis transmission de l'identifiant et de ce jeton unique chiffré au serveur SRV 320,
- réception par le serveur SRV 320 du jeton unique chiffré par le dispositif d'authentification 200 et vérification que le jeton unique chiffré reçu correspond au jeton unique retrouvé dans la base de données BDD 330 et chiffrée par la clef de chiffrement associée à l'identifiant reçu; si les deux chiffrements du jeton unique correspondent, alors le serveur SRV 320 envoie un message de validation au dispositif TAB 310 l'informant que l'authentification du dispositif d'authentification 200 a réussi ; sinon, le serveur SRV 320 envoie un message au dispositif TAB 310 l'informant que le dispositif d'authentification 200 n'est pas authentifié.

Selon un mode de réalisation de l'invention, on suppose que le signal sonore émis par le dispositif TAB 310 est aussi de courte portée. Ainsi, l'échange de signaux sonores de courte portée entre le dispositif d'authentification 200 et le dispositif TAB 310 permet de déterminer si le dispositif d'authentification 200 est à bonne distance du dispositif TAB 310 pour que le dispositif TAB 310 puisse recevoir le signal d'authentification. Si le dispositif d'authentification 200 ne reçoit pas le signal sonore émis par le dispositif TAB 310, le dispositif d'authentification détermine qu'il est trop éloigné du dispositif TAB 310. L'utilisateur peut alors être invité à rééditer son mouvement. Dans un mode de réalisation, le dispositif d'authentification comprend un second dispositif d'indication, comme par exemple une diode électroluminescente, s'éclairant lorsque, suite à une émission d'un signal d'authentification, le dispositif d'authentification 200 ne reçoit pas en retour un signal sonore émis par le dispositif TAB 310, ce qui signifie lors par exemple qu'il est trop éloigné du dispositif TAB 310.

Selon un mode de réalisation complémentaire de la présente invention, le transducteur électromécanique TRAN 420 est de type polymère électro-actif. L'usage d'un transducteur électromécanique TRAN 420 de type polymère électro-actif permet un meilleur rendement énergétique par rapport à d'autres technologies de type céramique ou composite piézoélectrique ainsi qu'un encombrement et une masse réduites, permettant la fabrication d'un dispositif d'authentification 200 plus compact ou léger. De plus, un transducteur électromécanique TRAN 420 de type polymère électro-actif est généralement plus solide par rapport à un transducteur électromécanique en céramique et permet des formes de transducteurs plus complexes, ce qui permet une meilleure intégration dans le dispositif d'authentification 200 et d'offrir un plus large éventail de formes pour le corps du dispositif d'authentification 200. En effet, du fait de la plasticité des polymères électro-actifs, ceux-ci peuvent être moulés ou imprimés sous n'importe quelle forme.

Plus globalement, l'utilisation de transducteur électromécanique de type polymère électro-actif permet une simplification de la conception du dispositif d'authentification 200, notamment par l'intégration de tout ou partie du régulateur d'impulsion mécanique REGM 410, du transducteur électromécanique TRAN 420 et de l'émetteur EMET 430, d'où une réduction des coûts de fabrication du dispositif d'authentification 200. Ainsi, l'utilisation de polymère électro-actif pour la fabrication de ressorts ou d'éléments élastiques contenus dans le régulateur d'impulsion mécanique REGM 410 permet d'intégrer les fonctionnalités du transducteur électromécanique TRAN 420 dans le régulateur d'impulsion mécanique REGM 410. Le transducteur électromécanique TRAN 420 et le régulateur d'impulsion mécanique REGM 410 forment alors un même module. De même, les fonctionnalités de l'émetteur EMET 430 peuvent aussi être intégrées dans ce même module, d'où une simplification mécanique du dispositif d'authentification 200. Cette simplification permet *in fine* une réduction du coût de fabrication du dispositif d'authentification 200.

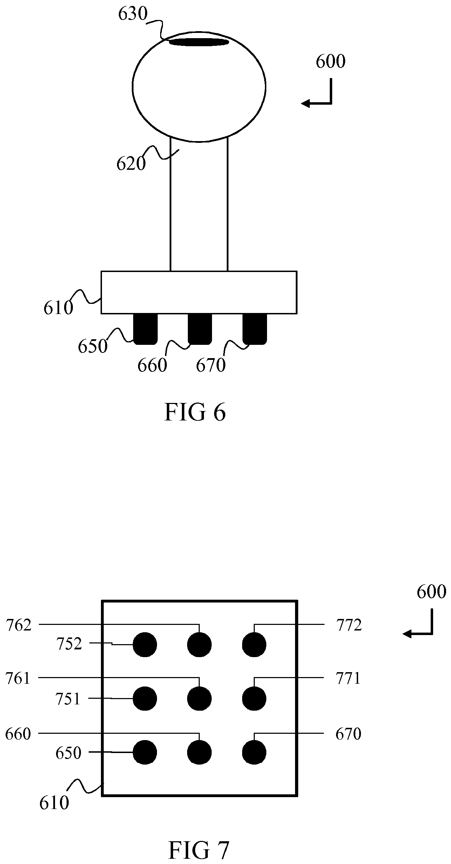

La **FIG. 6** illustre schématiquement un exemple d'aspect extérieur d'un dispositif d'authentification 600 selon un mode de réalisation complémentaire de la présente invention. Selon ce mode de réalisation complémentaire de l'invention, le dispositif d'authentification 600 comprend une batterie à la place du mécanisme d'alimentation électromécanique constitué des éléments 410, 420 et 450 précédemment décrit. Cela permet de simplifier l'architecture du dispositif d'authentification 200 au prix d'une perte d'autonomie énergétique. La batterie devant être rechargée ou remplacée, le dispositif d'authentification 600 peut comprendre une trappe d'accès à la batterie ou un port permettant la recharge. Dans un mode de réalisation alternatif de l'invention, la batterie n'est pas accessible ni rechargeable, le dispositif d'authentification 600 n'est alors plus utilisable lorsque la batterie est épuisée. Cette dernière particularité permet un contrôle de l'usage du dispositif d'authentification 600 en s'assurant de sa durée de fonctionnement. Il est alors possible de jouer sur la capacité de la batterie pour offrir une durée d'utilisation plus ou moins longue.

Le dispositif d'authentification 600 peut être visuellement similaire au dispositif d'authentification 200, c'est-à-dire ressemblant à un tampon. Le dispositif d'authentification 600 comprend un manche 620, similaire au manche 220, et un timbre 610, similaire au timbre 210. Le dispositif d'authentification 600 se distingue du dispositif d'authentification 200 par la présence supplémentaire d'une pluralité de picots, ou plots, disposés sur une face du dispositif d'authentification 600. Ces picots sont disposés, dans la Fig. 6, sous le dispositif d'authentification 600, c'est-à-dire sous le timbre 610. La Fig. 6 étant une vue de profil du dispositif d'authentification 600, seuls trois picots 650, 660 et 670 sont représentés. Les picots sont disposés de façon à dépasser du timbre 610 sous le dispositif d'authentification 600 et de telle façon que les extrémités des picots soient comprises dans un même plan parallèle à la base du dispositif d'authentification 600. Dit autrement, lorsque le dispositif d'authentification 600 est posé à la verticale, tel que représenté dans la Fig. 6, le plan formé par l'extrémité des picots est horizontal. Selon le mode de réalisation illustré dans la Fig. 6, les picots sont constitués d'un matériau souple. Les picots sont par exemple constitués d'un caoutchouc dont la dureté est comprise entre « Shore A 25 » et « Shore A 75 », par exemple « Shore A 50 » (« Shore A » faisant référence à l'échelle de dureté Shore pour les matériaux mous). Cette souplesse permet un contact des picots avec la surface d'un écran d'un dispositif électronique type « *smartphone* » ou tablette sans risque d'abîmer l'écran. Au moins deux picots parmi la pluralité de picots sont constitués d'un matériau conducteur de l'électricité (ci-après « conducteur »), les autres picots étant constitués d'un matériau isolant électrique. Selon un mode de réalisation de l'invention, les deux matériaux ont un même aspect extérieur afin d'éviter que les picots conducteurs et isolants puissent être distingués visuellement ou tactilement par un utilisateur. Ainsi, le matériau conducteur peut être du caoutchouc chargé en carbone et le matériau isolant un caoutchouc sans carbone, les deux matériaux étant choisis d'une même dureté comprise entre « Shore A 25 » et « Shore A 75 », par exemple « Shore A 50 ».

Selon un mode de réalisation de l'invention, le corps du dispositif d'authentification 600, c'est-à-dire le manche 620 et/ou le timbre 610, est recouvert ou constitué, au moins partiellement, d'un matériau conducteur de l'électricité. Préférentiellement, le manche 620, qui est la partie du dispositif d'authentification 600 tenue en main par un utilisateur, est recouvert du matériau conducteur. Une continuité électrique est assurée entre la partie du dispositif d'authentification 600 recouverte du matériau conducteur et tous les picots constitués d'un matériau conducteur. Ainsi, lorsque le dispositif d'authentification 600 est tenu en main par un utilisateur, les picots constitués d'un matériau conducteur peuvent être utilisés pour interagir avec un écran tactile utilisant une technologie tactile dite capacitive (ci-après « écran tactile capacitif »). Ledit matériau recouvrant le dispositif d'authentification 600 peut aussi être souple afin d'éviter de rayer un écran d'un dispositif électronique lors de la manipulation du dispositif d'authentification 600. Le matériau recouvrant, au moins partiellement le dispositif d'authentification 600 peut être un caoutchouc de dureté comprise entre « Shore A 40 » et « Shore A 90 », par exemple « Shore A 65 ». Selon un mode de réalisation de l'invention, le dispositif d'authentification 600 est entièrement recouvert d'un matériau souple.

Le dispositif d'authentification 600 comprend au moins un moyen pour détecter une pression exercée sur au moins un picot. Par exemple, un picot comprend en son sein un interrupteur, activé lorsque ledit picot est pressé contre une surface, par exemple un écran d'un dispositif électronique. Les picots peuvent être montés sur un support mobile à l'intérieur du dispositif d'authentification 600, avec un ressort de rappel. Une pression sur les picots peut alors déclencher un interrupteur lié au support mobile.

La **FIG. 7** est une vue de dessous du dispositif d'authentification 600 selon le mode de réalisation complémentaire de l'invention illustré en FIG. 6. Les picots 650, 660 et 670 apparaissent de profil sur la Fig. 6. Selon le mode de réalisation illustré dans la Fig. 7, le dispositif d'authentification 600 comprend « 9 » picots 650, 660, 670, 751, 761, 771, 752, 762 et 772, disposés « 3 » par « 3 ». Le nombre de picots peut être différent, ainsi que leur disposition. Parmi ces picots, au moins deux picots sont constitués d'un matériau conducteur d'électricité. Les autres picots sont constitués d'un matériau isolant électriquement. Les picots constitués d'un matériau conducteur déterminent une forme géométrique dans le plan horizontal. Il est ainsi possible de définir le périmètre de ladite forme géométrique, correspondant à une distance entre les picots constitués d'un matériau conducteur. Une aire de la forme géométrique peut aussi être définie. La forme géométrique peut être définie par les angles formés par les droites joignant les différents points de la forme géométrique. Un paramètre, dit ci-après « motif », peut ainsi être déterminé en fonction du positionnement des picots constitués de matériau conducteur. Le motif peut correspondre au périmètre de la forme géométrique, seul ou en combinaison avec d'autres attributs de la forme géométrique. Une même forme géométrique peut être constituée par différents picots. Ainsi, par exemple, choisir que seuls les picots 752, 751, 650 et 660 sont constitués d'un matériau conducteur aboutit au final à une même forme géométrique en « L » que le choix, entre autres possibilités, des picots 751, 761,771 et 772. Ces deux choix de groupe de picots constitués d'un matériau conducteur déterminent *in fine* un même motif.

Selon un mode de réalisation de l'invention, les picots constitués d'un matériau conducteur et les picots constitués d'un matériau isolant sont visuellement et tactilement identiques. Il n'est ainsi pas possible pour un utilisateur du dispositif d'authentification 600 de distinguer quels sont les picots constitués d'un matériau conducteur par une simple observation des picots. Par exemple, tous les picots sont constitués d'un caoutchouc de dureté comprise entre « Shore A 25 » et « Shore A 75 », par exemple « Shore A 50 ». Le caoutchouc constituant les picots conducteurs est de plus chargé en carbone afin de le rendre conducteur d'électricité. Il est ainsi impossible de différencier un picot conducteur d'un picot isolant visuellement ou tactilement. Ainsi, il n'est pas possible pour un utilisateur du dispositif d'authentification 600 de déceler le motif correspondant à la disposition des picots constitués d'un matériau conducteur par simple observation des picots. Plus généralement, l'ensemble des picots, conducteurs ou non, contribue à la stabilité du dispositif d'authentification 600 lorsque celui-ci est posé à la verticale. L'ensemble des picots, constitués d'un matériau souple, contribue aussi à l'amortissement lorsque le dispositif d'authentification 600 est pressé contre un écran tactile d'un dispositif électronique, ce qui réduit les risques de rayer ou abîmer ledit écran.

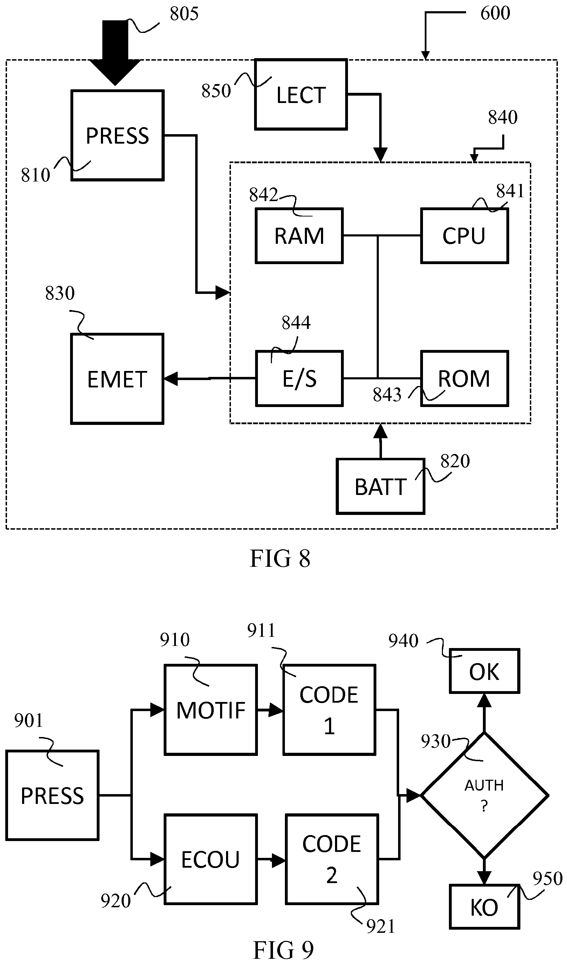

La **FIG. 8** illustre schématiquement un exemple d'architecture matérielle d'un dispositif d'authentification 600 selon le mode de réalisation complémentaire de l'invention illustré en FIG. 6. Dans ce mode de réalisation de l'invention, le dispositif d'authentification 600 comprend un microcontrôleur 840, possiblement identique au microcontrôleur 460. Le dispositif d'authentification 600 comprend une batterie BATT 820 permettant l'alimentation en énergie électrique du microcontrôleur 840. Le dispositif d'authentification 600 comprend un émetteur EMET 830, l'émetteur EMET 830 permettant l'émission d'un signal d'authentification.

Dans ce mode de réalisation de l'invention, le dispositif d'authentification 200 comprend un détecteur PRESS 810, par exemple un interrupteur, placé sur la partie dite timbre 610 du dispositif d'authentification 200. Le détecteur PRESS 810 est possiblement incorporé au sein d'un des picots souples précédemment décrits. Le détecteur PRESS 810 permet de détecter l'appui du dispositif d'authentification 200 sur une surface, par exemple l'écran tactile capacitif d'un dispositif électronique tel que le dispositif TAB 310. Le détecteur PRESS 810, par exemple un interrupteur ou bouton poussoir, permet ainsi de s'assurer que le dispositif d'authentification 600 est en appui sur le dispositif TAB 310. La détection d'une pression par le détecteur PRESS 810 déclenche l'émission par le dispositif d'authentification 600 du signal d'authentification. Cette émission peut être conditionnée à la détection simultanée d'une empreinte digitale prédéterminée par un lecteur d'empreinte digitale LECT 850.

Le microcontrôleur 840 est un dispositif électronique qui comprend une unité programmable de traitement de données (*Central Processing Unit* en anglais) CPU 841, une mémoire vive (*Random Access Memory* en anglais) RAM 842, une mémoire, ou module de stockage, de type non volatile ROM 843 et une ou plusieurs interfaces d'entrée/sortie E/S 844. Les interfaces E/S 844 peuvent comprendre des convertisseurs de signaux analogiques-numériques (Convertisseur Analogique Numérique ; CAN) ou numériques-analogiques (Convertisseur Numérique Analogique ; CNA), lesquels peuvent comprendre un module de modulation de largeur d'impulsions (MLI ou *Pulse Width Modulation* - PWM - en anglais). Lorsqu'il est alimenté électriquement par la batterie BATT 820, le microcontrôleur 840 est adapté pour générer une émission d'un premier signal électrique en sortie d'une interface de sortie E/S 844, le premier signal électrique correspondant au signal d'authentification à émettre par l'émetteur EMET 830.

Selon des modes de réalisation alternatifs, les fonctionnalités du microcontrôleur 840 sont remplies par un circuit logique programmable (*Field-Programmable Gate Arrays* - FPGA - en anglais), un processeur de signal numérique (*Digital Signal Processor* - DSP - en anglais), un circuit intégré propre à une application (*Application-Specific Integrated Circuit* - ASIC - en anglais) ou tout autre dispositif équivalent.

Selon un mode de réalisation particulier, ladite interface E/S 844 est connectée à un émetteur EMET 830, lequel émet alors le signal d'authentification. Selon la nature de l'émetteur EMET 830, il peut s'agir d'un signal de type sonore (émetteur EMET 830 de type haut-parleur par exemple), visuel (émetteur EMET 830 de type diode électroluminescente par exemple) ou de tout autre type. Le détecteur PRESS 810 et/ou le lecteur d'empreinte LECT 850 sont possiblement connectés au microcontrôleur 840 via l'interface E/S 844.

Selon un mode de réalisation de l'invention, l'émetteur EMET 830 est un émetteur compatible avec des technologies de type radio comme par exemple le *Bluetooth*®*,* communication en champ proche (*Near Field Communication* - NFC - en anglais), radio-identification (*Radio Frequency Identification* - RFID - en anglais) ou WiFi (« *Wireless Fidelity* » en anglais). Selon un mode de réalisation complémentaire, l'émetteur EMET 830 est un émetteur-récepteur, c'est-à-dire qu'il peut aussi recevoir un signal et permettre des communications bidirectionnelles.

Le signal d'authentification a donc vocation à être reçu par un dispositif électronique, par exemple le dispositif TAB 310 illustré dans la FIG. 3, lequel comporte un moyen de réception adapté au signal émis, par exemple un microphone dans le cas d'un signal d'authentification sonore. L'utilisation d'un signal d'authentification de type sonore permet donc une vaste compatibilité des usages du dispositif d'authentification 600 avec des dispositifs électroniques de type *« smartphone* » ou tablette, ceux-ci comprenant quasi systématiquement un microphone.

Le dispositif d'authentification 600 comprend les picots décrits précédemment, non représentés dans la Fig. 8. L'utilisation d'un signal d'authentification de type sonore en combinaison avec le motif constitué par les picots conducteurs permet une synergie. En effet, d'un côté l'utilisation d'un signal d'authentification sonore permet une quasi infinité de signaux d'authentification sonores différents, mais présente l'inconvénient de pouvoir être capté par des dispositifs électroniques proches. Ainsi, typiquement, un signal d'authentification sonore émis par le dispositif d'authentification 600 peut être reçu par un dispositif électronique situé à quelques centimètres ou à plusieurs mètres selon la sensibilité du microphone du dispositif électronique. D'un autre côté, les motifs constitués par quelques picots conducteurs sont en nombre fini, mais nécessitent, pour être détectés par un dispositif électronique, un contact physique entre ledit dispositif électronique et le dispositif d'authentification 600. Le détecteur PRESS 810, par exemple un interrupteur ou bouton poussoir, garantit ainsi qu'un signal d'authentification n'est émis que lorsque le dispositif d'authentification 600 est pressé contre un écran tactile d'un dispositif électronique.

Dit autrement, un dispositif électronique qui serait en attente d'authentification par un seul signal sonore pourrait potentiellement recevoir un signal sonore destiné à un autre dispositif électronique. La combinaison de l'authentification par un signal sonore et des picots permet ainsi par exemple de déclencher une fenêtre d'écoute (ouverture du microphone) seulement lorsqu'un motif est détecté par le dispositif électronique, ce qui réduit le risque de recevoir un signal sonore destiné à un autre dispositif électronique.

Selon un mode de réalisation complémentaire, une information prédéterminée est enregistrée dans la mémoire non volatile ROM 843 du microcontrôleur 840. Cette information peut être enregistrée dans la mémoire lors du processus de fabrication du dispositif d'authentification 600 ou lors d'une phase ultérieure de configuration du dispositif d'authentification 600, par exemple au moyen d'une interface de programmation non représentée. L'information prédéterminée peut comprendre plusieurs informations comme un identificateur du dispositif d'authentification 600 ou une clef de chiffrement.

Selon un mode de réalisation, la mémoire non volatile ROM 843 est de type non réinscriptible, il n'est donc plus possible de modifier ou d'effacer l'information prédéterminée une fois que celle-ci est enregistrée.

Il est à noter que selon un mode de réalisation, un programme comprenant des instructions de fonctionnement du microcontrôleur est enregistré dans cette mémoire non volatile et non réinscriptible ROM 843. Cela permet de prémunir contre toute modification du mode de fonctionnement du dispositif d'authentification 600. Ainsi, lorsque le microcontrôleur 840 est alimenté par la batterie BATT 820, le microcontrôleur 840 peut être adapté pour retrouver l'information prédéterminée enregistrée sur le module de stockage ou mémoire ROM 843 et générer à partir de cette information prédéterminée l'émission d'un premier signal électrique correspondant au signal d'authentification à émettre par l'émetteur EMET 830.

Selon un mode de réalisation complémentaire de l'invention, le dispositif d'authentification 600 comprend un lecteur d'empreintes digitales LECT 850. Ce lecteur d'empreintes digitales LECT 850 permet de conditionner l'émission du signal sonore d'authentification à la détection d'une ou plusieurs empreintes digitales prédéterminées. Cela permet d'offrir un niveau de sécurité supplémentaire, en garantissant que l'utilisateur du dispositif d'authentification 600 est autorisé à s'en servir. Ainsi, des informations correspondant aux empreintes digitales des utilisateurs autorisés à se servir du dispositif d'authentification 600 peuvent être préalablement enregistrées dans la mémoire non volatile ROM 843 lors de la phase de fabrication ou lors d'une phase ultérieure de configuration. Si, lors de l'utilisation du dispositif d'authentification 600, aucune empreinte correspondant à une empreinte enregistrée sur la mémoire non volatile ROM 843 n'est retrouvée par le microcontrôleur 840, alors le processus d'émission du signal d'authentification est stoppé, sans émission de signal d'authentification. Selon un mode de réalisation complémentaire de l'invention, un signal prédéterminé, correspondant à un code d'erreur, est alors émis à la place du signal d'authentification. Selon un mode de réalisation alternatif de l'invention, un signal aléatoire est émis à la place du signal d'authentification.

Selon un mode de réalisation complémentaire de l'invention, des données correspondant à l'empreinte digitale lue par le lecteur d'empreintes digitales LECT 850 sont comprises dans le signal d'authentification émis par le dispositif d'authentification 600. La fonctionnalité de vérification de l'empreinte digitale à partir des données correspondant à l'empreinte digitale lue peut donc être déportée auprès d'un dispositif électronique, par exemple le dispositif TAB 310 ou un serveur SRV 320, tels qu'illustrés dans la FIG. 3.

Selon un mode de réalisation de l'invention non décrit, il est possible de concevoir un dispositif d'authentification comprenant le mécanisme d'alimentation électromécanique décrit dans la description du dispositif d'authentification 200. Ce dispositif d'authentification peut ainsi se passer de la batterie BATT 820. Comme dit précédemment, le dispositif d'authentification 200 peut comprendre un détecteur. Le détecteur permet de détecter l'appui du dispositif d'authentification 200 sur une surface, par exemple une surface du dispositif TAB 310 et de relâcher un percuteur, libérant ainsi l'impulsion mécanique quand le dispositif d'authentification 200 est en appui sur le dispositif TAB 310. Le détecteur est ainsi le détecteur PRESS 810 décrit précédemment. Avantageusement, le détecteur PRESS 810 est ainsi placé dans un picot souple et permet de remplir la fonction de relâchement du percuteur menant *in fine* à l'émission du signal d'authentification par l'émetteur EMET 830. De la même façon que précédemment décrite, l'émetteur EMET 830 peut être un piézoélectrique.

La **FIG. 9** est un organigramme d'un procédé d'authentification utilisant un dispositif d'authentification selon le mode de réalisation complémentaire de l'invention illustré en FIG. 6.

Le dispositif d'authentification 600 peut être utilisé dans le système décrit dans la FIG. 3 de façon identique au dispositif d'authentification 200. Le dispositif TAB 310 exécute une application dédiée. Le dispositif TAB 310 comprend un écran tactile capacitif et un récepteur. Selon un mode de réalisation de l'invention, le récepteur est un microphone. Ladite application permet la sélection d'un identifiant d'un dispositif d'authentification 600 parmi une pluralité d'identifiants possibles. Ainsi, chaque identifiant correspond à un dispositif d'authentification 600 unique, chaque dispositif d'authentification 600 correspondant par exemple à une société ou à un utilisateur, par exemple un marchand. Le procédé permet l'authentification de l'identifiant sélectionné par le dispositif d'authentification 600 correspondant à cet identifiant. Dans un scénario d'utilisation, l'application est une application de gestion de la livraison de courrier postal, un dispositif d'authentification 600 étant associé à chaque destinataire d'un courrier postal. Une personne livrant le courrier postal utilise un dispositif électronique tel que le dispositif TAB 310 pour faire valider par l'utilisateur destinataire d'un courrier la bonne réception de ce courrier au moyen du dispositif d'authentification lui correspondant. Le dispositif TAB 310 exécute une application dédiée.

Préalablement à l'étape 901, l'utilisateur du dispositif TAB 310 exécute une application permettant une authentification au moyen d'un dispositif d'authentification 600. L'utilisateur sélectionne, possiblement via une interface graphique présentée sur un écran du dispositif TAB 310, un identifiant associé à un dispositif d'authentification 600. L'identifiant et le dispositif d'authentification 600 sont associés à un utilisateur dont l'identité a possiblement été vérifiée précédemment. Selon un mode de réalisation de l'invention, la sélection de l'identifiant est automatique, par exemple en prenant comme identifiant celui qui correspond au destinataire d'un courrier sur le point d'être livré à un destinataire. Le dispositif TAB 310 retrouve alors dans une base de données les données d'authentification correspondant à l'identifiant à authentifier. Ces données comprennent un signal d'authentification et un motif associés à un dispositif d'authentification 600. Selon un mode de réalisation de l'invention, les données d'authentification ne comprennent pas le signal d'authentification lui-même mais une empreinte de celui-ci (« *hash* » en anglais).

Une fois un identifiant sélectionné, l'application se met en attente de la détection d'entrées sur son écran tactile capacitif.

Dans l'étape 901, au moins une entrée est détectée sur l'écran tactile capacitif du dispositif TAB 310. Cela correspond à la mise en contact de tous les picots du dispositif d'authentification 600 sur l'écran tactile capacitif du dispositif TAB 310. Ainsi, seuls les picots constitués d'un matériau conducteur sont détectés. La continuité électrique entre les picots constitués d'un matériau conducteur et le corps du dispositif d'authentification 600 constitué d'un matériau conducteur permet le bon fonctionnement de l'écran tactile capacitif si le corps du dispositif d'authentification 600 est tenu en main par un utilisateur. Le dispositif d'authentification 600, détectant la mise en contact avec l'écran tactile capacitif du dispositif TAB 310 au moyen du détecteur PRESS 810, déclenche le signal d'authentification au moyen de l'émetteur EMET 830. Selon un mode de réalisation de l'invention, l'émetteur EMET 830 est un haut-parleur émettant un signal sonore ou ultrasonore. Possiblement, l'émission est aussi conditionnée à la présence d'une empreinte digitale prédéterminée sur le lecteur d'empreintes digitales LECT 850.

Dans une étape 920, le dispositif TAB 310 reçoit le signal d'authentification. Pour cela, soit le dispositif TAB 310 est en écoute en permanence, soit la détection d'entrées lors de l'étape 901 déclenche une phase d'écoute pendant une durée prédéterminée.

Une fois le signal d'authentification reçu, dans une étape 921, le dispositif TAB 310 décode le signal d'authentification. Cette étape peut être optionnelle ou peut comprendre la vérification d'un code correcteur d'erreur. Cette étape peut correspondre au calcul d'une empreinte (« *hash* ») à partir du signal d'authentification.

Dans une étape 910, le dispositif TAB 310 détermine un motif en fonction de la forme géométrique formée par les entrées détectées sur l'écran tactile capacitif. Le motif peut être déterminé par une distance calculée entre les différentes entrées. Chaque entrée sur l'écran tactile capacitif correspond à la position d'un picot constitué d'un matériau conducteur.

Une étape 911 optionnelle de vérification du motif déterminé peut être effectuée.

Dans une étape 930, le dispositif TAB 310 vérifie que le signal d'authentification reçu lors de l'étape 920 est bien égal au signal d'authentification du motif déterminé. Pour cela, le dispositif TAB 310 compare les deux signaux d'authentification ou bien leurs empreintes (« hash »).

Le dispositif TAB 310 vérifie dans un même temps que le motif déterminé lors de l'étape 910 correspond bien au motif associé à l'identifiant.

Si les signaux d'authentifications (ou leurs empreintes) sont identiques et que les motifs correspondent, alors l'authentification est validée (étape 940). Dans le cas contraire, l'authentification est invalidée (étape 950).

Le procédé précédemment décrit peut correspondre à un scénario de gestion de carte de fidélité par un commerçant. La carte de fidélité devient alors virtuelle en étant intégrée dans une application. Dans ce scénario, chaque utilisateur ou client dispose d'un dispositif électronique, tel que le dispositif TAB 310, exécutant une application de gestion de carte de fidélité. Cette application peut être dédiée pour un commerçant. Cette application peut au contraire permettre de gérer plusieurs programmes de fidélité de plusieurs commerçants. Un client, voulant faire valider sa carte virtuelle de fidélité, ouvre l'application et sélectionne, si besoin, le commerçant correspondant. Ledit commerçant tamponne alors l'écran du dispositif électronique du client au moyen du dispositif d'authentification 600. La détection du motif et la réception du signal sonore, les deux combinés correspondant au commerçant, permettent la validation du « coup de tampon » par l'application. La carte de fidélité virtuelle peut alors être incrémentée.

Selon un autre scénario d'utilisation, non illustré, le dispositif d'authentification 600 peut permettre l'identification d'un utilisateur du dispositif d'authentification 600, l'utilisateur étant précédemment associé au dispositif d'authentification 600. Ainsi, une base de données peut comprendre des listes permettant l'association entre un utilisateur (prénom, nom, etc.) et un dispositif d'authentification 600 (numéro de série).

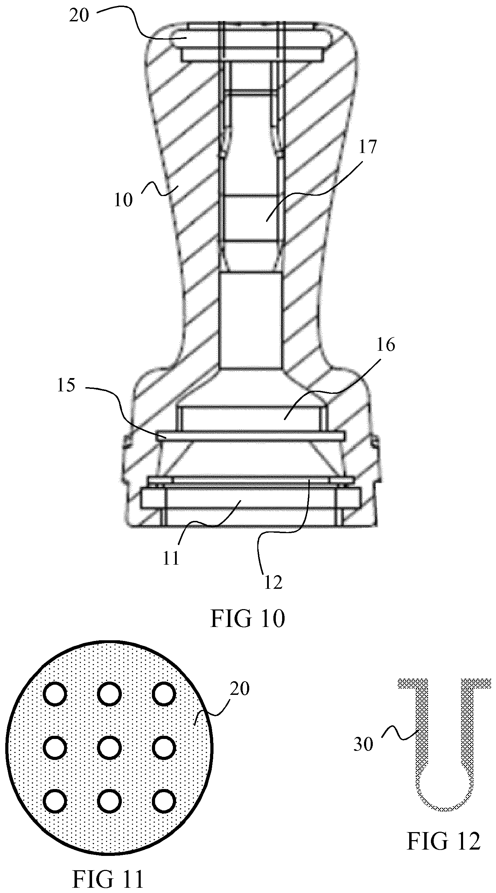

La **FIG. 10** est une vue en coupe d'un corps 10 d'un dispositif d'authentification 600 selon un mode de réalisation complémentaire de la présente invention. Selon ce mode de réalisation complémentaire, le dispositif d'authentification 600 est composé d'un corps 10 monobloc, obtenu par exemple par moulage. Le manche 620 et le timbre 610 sont alors une seule et même pièce. Le corps 10 est constitué d'un matériau souple, par exemple un caoutchouc de dureté comprise entre « Shore A 40 » et « Shore A 90 », afin d'éviter que tout contact du dispositif d'authentification 600 avec un écran d'un dispositif électronique ne puisse rayer l'écran. Le corps 10 est constitué par exemple d'un caoutchouc de dureté « Shore A 65 ». Le corps 10 est constitué d'un matériau conducteur de l'électricité, par exemple un caoutchouc de dureté « Shore A 65 » chargé en carbone. Le corps 10 peut posséder un axe de symétrie autour de l'axe vertical, le dispositif d'authentification 600 ayant alors une forme dite « arrondie ». Le corps 10 peut posséder deux plans de symétrie selon deux plans verticaux orthogonaux ayant pour intersection l'axe vertical du corps 10, le dispositif d'authentification 600 ayant alors une forme dite « carrée ». D'autres formes sont possibles. Le corps 10 est possiblement creux, ménageant en particuliers deux zones vides 16 et 17. Selon un mode de réalisation, la zone 16 est destinée à accueillir un microcontrôleur, par exemple le microcontrôleur 840. Le microcontrôleur peut prendre la forme d'un circuit imprimé, lequel circuit imprimé est de taille adaptée pour s'insérer de force dans une rainure 15 ménagée dans le corps 10 afin d'être maintenu en place. Le circuit imprimé peut comprendre dans sa face inférieure, c'est-à-dire la face à l'opposé de la zone 16, un bouton poussoir, par exemple le détecteur PRESS 810. Un émetteur, par exemple l'émetteur 830, peut être fixé sur le circuit imprimé, ou directement intégré au circuit imprimé. L'émetteur peut être un haut-parleur de taille adaptée pour s'insérer à l'intérieur du corps 10. De la même façon, une plaque, dite plaque d'appui, peut être insérée dans une rainure 12. Une plaque, dite de maintien, peut être insérée dans une rainure 11. Une telle plaque dite de maintien est illustrée dans la FIG. 11 pour le cas d'un dispositif d'authentification 600 dit « rond ». Dans le cas d'un dispositif d'authentification 600 dit de forme « carrée », une plaque de maintien aurait visuellement l'aspect de la vue 610. La plaque d'appui est possiblement constituée d'un matériau conducteur de l'électricité. La plaque d'appui est typiquement métallique. Dans ce cas, et si le corps 10 est aussi constitué d'un matériau conducteur de l'électricité, une protection type cage de Faraday est constituée permettant de protéger le circuit imprimé, et plus généralement tout microcontrôleur disposé à l'intérieur du dispositif d'authentification 600, par exemple dans la zone 16 ou 17. Le microcontrôleur est ainsi protégé de toute interférence électromagnétique, ce qui préserve sa durée de vie. Une plaque ou un élément permettant de fermer la cage de Faraday est inséré dans une rainure 20 afin de fermer la cage de Faraday sur la partie supérieure du dispositif d'authentification 600. Cet élément peut être un lecteur d'empreinte digitale 630, qui est ainsi idéalement disposé sur la partie haute du dispositif d'authentification 600. Alternativement, la zone supérieure du corps 10 dans laquelle la rainure 20 est représentée est pleine, c'est-à-dire qu'aucune ouverture n'est présente dans la partie supérieure du corps 10.

La zone 17 à l'intérieur du corps 10 peut comprendre une batterie, par exemple la batterie 820. Cette zone 17 peut alternativement comprendre les moyens électromécaniques de génération d'une alimentation électrique précédemment décrits dans la Fig. 4, c'est-à-dire les éléments 410, 420 et 450.

Selon un mode de réalisation alternatif de l'invention, le corps 10 est constitué de plusieurs parties. Ces parties peuvent être assemblées de manière permanente, par exemple par soudage ou collage. Ces parties peuvent être assemblées de manière non définitive, par exemple par clipsage, sertissage ou vissage.

La **FIG. 11** est une illustration d'une pièce 20 destinée à être intégrée dans le dispositif d'authentification tel qu'illustré dans la FIG. 10, c'est-à-dire une plaque 20 dite plaque de maintien. La forme de la plaque 20 est adaptée à son insertion par force dans la rainure 11 du corps 10 Des ouvertures sont ménagées dans la plaque 20 de maintien afin de permettre le passage de picots, par exemple les picots 750, 760, 770, 751, 761, 771, 752, 762, 772. Un tel picot est illustré dans la FIG. 12. Un numéro de série peut être écrit sur cette plaque 20 de maintien ou alternativement sur le corps 10 du dispositif d'authentification 600. Lors d'une phase de configuration, le dispositif d'authentification 600 peut être activé afin de détecter le motif du dispositif d'authentification 600 ainsi que le signal d'authentification émis. Il est alors possible d'associer lesdits motif et signal d'authentification au numéro de série, ce qui permet d'identifier par la suite le dispositif d'authentification 600 par un identifiant unique correspondant au numéro de série. Alternativement, ou en complément, un numéro de série peut aussi être inscrit sur le circuit imprimé, possiblement en association avec le signal d'authentification.

La **FIG. 12** est une vue en coupe d'un picot 30 destiné à être intégré dans le dispositif d'authentification tel qu'illustré dans la FIG. 10. Le picot 30 est ici représenté dans une position verticale. La partie haute du picot 30 correspond à la base, destinée à être en contact avec la plaque d'appui. La partie basse correspond à la partie destinée à être mise en contact avec un écran tactile d'un dispositif électronique. Un picot 30 peut ainsi être constitué d'un matériau souple, par exemple un caoutchouc de dureté comprise entre « Shore A 25 » et « Shore A 75 », par exemple « Shore A 50 ». Certains picots 30 sont constitués d'un caoutchouc chargé en carbone afin de les rendre conducteurs de l'électricité. La base de chaque picot 30 étant plus large que les ouvertures ménagées dans la plaque 20 de maintien, les picots sont maintenus, leurs bases étant possiblement pressées entre la plaque 20 de maintien et la plaque d'appui. Un appui du dispositif d'authentification 600 sur un écran tactile d'un dispositif électronique repousse les picots vers le haut, garantissant un contact des bases de chaque picot, en particulier des picots constitués d'un matériau conducteur, avec la plaque d'appui, constituée d'un matériau conducteur.

Selon un mode de réalisation complémentaire de l'invention, la plaque d'appui est percée en son centre, en regard de l'ouverture correspondant au picot central (picot 761). Ainsi, une tige rigide peut être insérée dans le picot 761 afin qu'une pression sur ledit picot 761 permette d'activer un bouton poussoir, par exemple le détecteur PRESS 810, disposé sur la face inférieure d'un circuit imprimé inséré dans la rainure 15. La tige rigide passe alors à travers l'ouverture ménagée dans la plaque d'appui.

Selon un mode de réalisation complémentaire de l'invention, certains picots comprennent des tiges rigides, prenant appui sur la plaque d'appui, afin de contrôler la profondeur d'enfoncement des picots lorsque le dispositif d'authentification 600 est pressé contre une surface, par exemple un écran d'un dispositif électronique.

Selon un mode de réalisation complémentaire de l'invention, le nombre de picots constitués d'un matériau conducteur est inférieur ou égal à quatre. En effet, disposer de deux, trois ou quatre picots constitués d'un matériau conducteur d'électricité permet un bon compromis entre, d'un côté, disposer d'un nombre de motifs différents suffisant et, d'un autre côté, assurer une détection rapide dudit motif par un écran tactile d'un dispositif électronique. En effet, lorsque les picots constitués d'un matériau conducteur sont trop nombreux, typiquement supérieurs à cinq, la détection du motif par un dispositif électronique donné peut être aléatoire ou lente. De plus, certains écrans tactiles ne permettent pas la détection simultanée de plus de cinq points de contact, ces écrans étant typiquement conçus pour être utilisés avec cinq doigts d'une main.

## Revendications

1. Dispositif d'authentification (600) destiné à être utilisé avec un dispositif électronique (310) comprenant un écran tactile capacitif configuré pour détecter un motif constitué par des picots constitués d'un matériau conducteur, et un récepteur, le dispositif d'authentification étant **caractérisé en ce qu'**il comprend :
- une pluralité de picots (750, 760, 770, 751, 761, 771, 752, 762, 772) disposés sur une même face du dispositif d'authentification, au moins deux picots étant constitués d'un matériau conducteur, les autres picots étant constitués d'un matériau isolant, tous les picots étant d'un aspect identique et le positionnement géométrique des picots constitués de matériau conducteur constitue un motif associé avec un signal d'authentification,
- un moyen (810) pour détecter une pression exercée sur au moins un picot, et,
- un moyen (830) pour émettre le signal d'authentification destiné à être reçu par le récepteur lorsqu'une pression est détectée par le moyen (810) pour détecter une pression, le signal d'authentification étant un signal sonore.

2. Dispositif d'authentification selon la revendication précédente, le positionnement géométrique des picots constitués de matériau conducteur constituant un motif, le motif étant associé avec le signal d'authentification.

3. Dispositif d'authentification selon l'une des revendications précédentes, le dispositif d'authentification étant au moins partiellement constitué d'un matériau conducteur, une continuité électrique étant assurée avec les picots constitués d'un matériau conducteur.

4. Dispositif d'authentification selon la revendication précédente, le matériau conducteur constituant les picots et/ou recouvrant le dispositif d'authentification étant souple.

5. Dispositif d'authentification selon l'une des revendications précédentes, le dispositif d'authentification comprenant un corps (10) monobloc et creux constitué d'un matériau souple et conducteur d'électricité, le corps comprenant au moins une rainure (15) permettant l'insertion d'une plaque d'appui constituée d'un matériau conducteur d'électricité sur laquelle les picots sont en appui, l'intérieur du corps du dispositif d'authentification constituant une cage de Faraday.

6. Dispositif d'authentification selon l'une des revendications précédentes, le dispositif d'authentification comprenant en outre des moyens (850) pour lire une empreinte digitale lorsqu'une pression est détectée sur au moins un picot, le signal d'authentification n'étant émis que si l'empreinte digitale lue correspond à une empreinte digitale prédéterminée.

7. Dispositif d'authentification selon l'une des revendications précédentes, au plus quatre picots étant constitués d'un matériau conducteur, les autres picots étant constitués d'un matériau isolant.

8. Procédé d'authentification d'un identifiant associé à un dispositif d'authentification, le procédé étant exécuté par un dispositif électronique comprenant un écran tactile capacitif configuré pour détecter un motif constitué par au moins deux picots constitués d'un matériau conducteur parmi une pluralité de picots dudit dispositif d'authentification utilisable sur ledit écran tactile, et un récepteur, le procédé comportant les étapes de :
- recevoir la sélection d'un premier identifiant associé à un premier dispositif d'authentification,
- retrouver un premier signal d'authentification et un premier motif associés au premier identifiant,
- détecter (901) au moins deux points d'entrée sur l'écran tactile capacitif créés par l'application d'un deuxième dispositif d'authentification sur l'écran tactile capacitif,
- déterminer (910) un deuxième motif en fonction des points d'entrée détectés, le deuxième motif étant constitué par le positionnement géométrique desdits au moins deux picots constitués d'un matériau conducteur dudit dispositif d'authentification, les autres picots de ladite pluralité de picots étant constitués d'un matériau isolant, et tous les picots étant d'un aspect identique,
- recevoir (920) un deuxième signal d'authentification au moyen dudit récepteur,
- authentifier (930) le premier identifiant si le deuxième signal d'authentification est égal au premier signal d'authentification et si le deuxième motif est égal au premier motif.

9. Procédé d'authentification d'un identifiant associé à un dispositif d'authentification selon la revendication précédente, l'étape de déterminer un deuxième motif comprenant une étape de calculer au moins une distance entre les points d'entrée détectés sur l'écran tactile capacitif.

10. Système pour une authentification d'un identifiant associé à un dispositif d'authentification (600) selon l'une des revendications 1 à 7, le système comprenant :
- le dispositif d'authentification selon l'une des revendications 1 à 7,
- un dispositif électronique (310) comprenant un écran tactile capacitif et un récepteur, le dispositif électronique étant adapté pour exécuter un procédé d'authentification selon l'une des revendications 8 ou 9.

11. Programme d'ordinateur, **caractérisé en ce qu'**il comprend des instructions pour mettre en œuvre, par un processeur d'un dispositif électronique (310), le procédé permettant l'authentification d'un identifiant associé à un dispositif d'authentification (600) selon l'une quelconque des revendications 8 ou 9, lorsque le programme d'ordinateur est exécuté par le processeur.

12. Support d'enregistrement, lisible par un dispositif électronique, sur lequel est stocké le programme selon la revendication précédente.

## Patentansprüche

1. Authentifizierungsvorrichtung (600), die dazu bestimmt ist, mit einer elektronischen Vorrichtung (310) verwendet zu werden, die einen kapazitiven Berührungsbildschirm, der konfiguriert ist, ein aus aus einem leitenden Material bestehenden Stiften bestehendes Muster zu erfassen, und einen Empfänger enthält, wobei die Authentifizierungsvorrichtung **dadurch gekennzeichnet ist, dass** sie enthält:
- eine Vielzahl von Stiften (750, 760, 770, 751, 761, 771, 752, 762, 772), die auf einer gleichen Seite der Authentifizierungsvorrichtung angeordnet sind, wobei mindestens zwei Stifte aus einem leitenden Material bestehen, während die anderen Stifte aus einem isolierenden Material bestehen, wobei alle Stifte gleich aussehen und die geometrische Positionierung der aus leitendem Material bestehenden Stifte ein Muster bildet, das mit einem Authentifizierungssignal verbunden ist,
- eine Einrichtung (810) zur Erfassung eines auf mindestens einen Stift ausgeübten Drucks, und
- eine Einrichtung (830) zum Senden des Authentifizierungssignals, das dazu bestimmt ist, vom Empfänger empfangen zu werden, wenn ein Druck von der Einrichtung (810) zur Erfassung eines Drucks erfasst wird, wobei das Authentifizierungssignal ein Tonsignal ist.

2. Authentifizierungsvorrichtung nach dem vorhergehenden Anspruch, wobei die geometrische Positionierung der aus leitendem Material bestehenden Stift ein Muster bildet, wobei das Muster mit dem Authentifizierungssignal verbunden ist.

3. Authentifizierungsvorrichtung nach einem der vorhergehenden Ansprüche, wobei die Authentifizierungsvorrichtung mindestens teilweise aus einem leitenden Material besteht, wobei eine elektrische Kontinuität mit den aus einem leitenden Material bestehenden Stiften gewährleistet ist.

4. Authentifizierungsvorrichtung nach dem vorhergehenden Anspruch, wobei das die Stifte bildende und/oder die Authentifizierungsvorrichtung bedeckende leitende Material weich ist.

5. Authentifizierungsvorrichtung nach einem der vorhergehenden Ansprüche, wobei die Authentifizierungsvorrichtung einen einstückigen und hohlen Körper (10) enthält, der aus einem weichen und stromleitenden Material besteht, wobei der Körper mindestens eine Rille (15) enthält, die das Einführen einer aus einem stromleitenden Material bestehenden Auflageplatte ermöglicht, auf der die Stifte aufliegen, wobei das Innere des Körpers der Authentifizierungsvorrichtung einen Faraday'schen Käfig bildet.

6. Authentifizierungsvorrichtung nach einem der vorhergehenden Ansprüche, wobei die Authentifizierungsvorrichtung außerdem Einrichtungen (850) enthält, um einen Fingerabdruck zu lesen, wenn ein Druck auf mindestens einen Stift erfasst wird, wobei das Authentifizierungssignal nur gesendet wird, wenn der gelesene Fingerabdruck einem vorbestimmten Fingerabdruck entspricht.

7. Authentifizierungsvorrichtung nach einem der vorhergehenden Ansprüche, wobei höchstens vier Stifte aus einem leitenden Material bestehen, während die anderen Stifte aus einem isolierenden Material bestehen.

8. Verfahren zur Authentifizierung einer einer Authentifizierungsvorrichtung zugeordneten Kennung, wobei das Verfahren von einer elektronischen Vorrichtung ausgeführt wird, die einen kapazitiven Berührungsbildschirm, der konfiguriert ist, ein aus mindestens zwei aus einem leitenden Material bestehenden Stiften unter einer Vielzahl von Stiften der auf dem Berührungsbildschirm verwendbaren Authentifizierungsvorrichtung bestehendes Muster zu erfassen, und einen Empfänger enthält, wobei das Verfahren die folgenden Schritte aufweist:
- Empfang der Auswahl einer ersten einer ersten Authentifizierungsvorrichtung zugeordneten Kennung,
- Wiederfinden eines ersten Authentifizierungssignals und eines ersten Musters, die der ersten Kennung zugeordnet sind,
- Erfassen (901) von mindestens zwei Eingangspunkten auf dem kapazitiven Berührungsbildschirm, die durch die Anwendung einer zweiten Authentifizierungsvorrichtung auf den kapazitiven Berührungsbildschirm erzeugt werden,
- Bestimmen (910) eines zweiten Musters abhängig von den erfassten Eingangspunkten, wobei das zweite Muster aus der geometrischen Positionierung der mindestens zwei aus einem leitenden Material bestehenden Stifte der Authentifizierungsvorrichtung besteht, wobei die anderen Stifte der Vielzahl von Stiften aus einem isolierenden Material bestehen, und alle Stifte gleich aussehen,
- Empfang (920) eines zweiten Authentifizierungssignals mittels des Empfängers,
- Authentifizieren (930) der ersten Kennung, wenn das zweite Authentifizierungssignal gleich dem ersten Authentifizierungssignal ist, und wenn das zweite Muster gleich dem ersten Muster ist.

9. Verfahren zur Authentifizierung einer einer Authentifizierungsvorrichtung zugeordneten Kennung nach dem vorhergehenden Anspruch, wobei der Schritt der Bestimmung eines zweiten Musters einen Schritt der Berechnung mindestens eines Abstands zwischen den auf dem kapazitiven Berührungsbildschirm erfassten Eingangspunkten enthält.

10. System für eine Authentifizierung einer einer Authentifizierungsvorrichtung (600) nach einem der Ansprüche 1 bis 7 zugeordneten Kennung, wobei das System enthält:
- die Authentifizierungsvorrichtung nach einem der Ansprüche 1 bis 7,
- eine elektronische Vorrichtung (310), die einen kapazitiven Berührungsbildschirm und einen Empfänger enthält, wobei die elektronische Vorrichtung geeignet ist, ein Authentifizierungsverfahren nach einem der Ansprüche 8 oder 9 auszuführen.

11. Computerprogramm, **dadurch gekennzeichnet, dass** es Anweisungen zur Durchführung, durch einen Prozessor einer elektronischen Vorrichtung (310), des Verfahrens enthält, das die Authentifizierung einer Kennung ermöglicht, die einer Authentifizierungsvorrichtung (600) nach einem der Ansprüche 8 oder 9 zugeordnet ist, wenn das Computerprogramm von dem Prozessor ausgeführt wird.

12. Speicherträger, von einer elektronischen Vorrichtung lesbar, auf dem das Programm nach dem vorhergehenden Anspruch gespeichert ist.

## Claims

1. Authentication device (600) designed to be used with an electronic device (310) comprising a capacitive touch screen configured to detect a pattern formed by pins consisting of a conductive material, and a receiver, the authentication device being **characterized in that** it comprises:
- a plurality of pins (750, 760, 770, 751, 761, 771, 752, 762, 772) arranged on the same face of the authentication device, at least two pins consisting of a conductive material, the other pins consisting of an insulating material, all the pins having an identical appearance and the geometrical positioning of the pins consisting of conductive material constitutes a pattern associated with an authentication signal,
- means (810) for detecting pressure exerted on at least one pin, and
- means (830) for emitting the authentication signal to be received by the receiver when pressure is detected by the means (810) for detecting pressure, the authentication signal being a sound signal.

2. Authentication device according to the preceding claim, the geometrical positioning of the pins consisting of conductive material constituting a pattern, the pattern being associated with the authentication signal.

3. Authentication device according to either of the preceding claims, the authentication device being at least partially made of a conductive material, an electrical continuity being ensured with the pins consisting of a conductive material.

4. Authentication device according to the preceding claim, the conductive material constituting the pins and/or covering the authentication device being flexible.

5. Authentication device according to one of the preceding claims, the authentication device comprising a monobloc and hollow body (10) consisting of a flexible material which is a conductor of electricity, the body comprising at least one groove (15) enabling the insertion of a support plate consisting of an electrically conductive material on which the pins are supported, the interior of the body of the authentication device constituting a Faraday cage.

6. Authentication device according to one of the preceding claims, the authentication device further comprising means (850) of reading a fingerprint when pressure is detected on at least one pin, the authentication signal only being emitted if the fingerprint read corresponds to a predetermined fingerprint.

7. Authentication device according to one of the preceding claims, at most four pins consisting of a conductive material, the other pins consisting of an insulating material.

8. Method for authentication of an identifier associated with an authentication device, the method being executed by an electronic device comprising a capacitive touch screen configured to detect a pattern formed by at least two pins consisting of a conductive material from among a plurality of pins of said authentication device able to be used on said touch screen, and a receiver, the method comprising the steps of:
- receiving the selection of a first identifier associated with a first authentication device,
- retrieving a first authentication signal and a first pattern associated with the first identifier,
- detecting (901) at least two input points on the capacitive touch screen created by the application of a second authentication device on the capacitive touch screen,
- determining (910) a second pattern as a function of the input points detected, the second pattern being formed by the geometrical positioning of said at least two pins consisting of a conductive material of said authentication device, the other pins of said plurality of pins consisting of an insulating material, and all the pins having an identical appearance,
- receiving (920) a second authentication signal by means of said receiver,
- authenticating (930) the first identifier if the second authentication signal is equal to the first authentication signal and if the second pattern is equal to the first pattern.

9. Method for authentication of an identifier associated with an authentication device according to the preceding claim, the step of determining a second pattern involving a step of calculating at least one distance between the input points detected on the capacitive touch screen.

10. System for authentication of an identifier associated with an authentication device (600) according to one of Claims 1 to 7, the system comprising:
- the authentication device according to one of Claims 1 to 7,
- an electronic device (310) comprising a capacitive touch screen and a receiver, the electronic device being designed to execute an authentication method according to either of Claims 8 and 9.

11. Computer program, **characterized in that** it comprises instructions to carry out, by a processor of an electronic device (310), the method enabling the authentication of an identifier associated with an authentication device (600) according to either one of Claims 8 and 9 when the computer program is executed by the processor.

12. Recording medium, able to be read by an electronic device and on which the program according to the preceding claim is stored.
